# EUROPEAN PATENT APPLICATION

(11) **EP 4 756 579 A1**
(43) Date of publication of application: **10.06.2026**
(21) Application number: 24894408.4
(22) Date of filing: 28.10.2024
(51) Int. Cl.: G06F 3/01, G06F 1/16, G06T 19/00, G06T 5/77, G06T 5/90, G02B 27/01

(54) **WEARABLE ELECTRONIC DEVICE FOR DISPLAYING VIRTUAL OBJECT AND CONTROL METHOD THEREFOR**

(30) Priority: 20.11.2023 KR 20230161522; 05.01.2024 KR 20240002435
(71) Applicant: Samsung Electronics Co., Ltd., Suwon-si, Gyeonggi-do 16677 (KR)
(72) Inventor: KIM, Sooryuh, Suwon-si, Gyeonggi-do 16677 (KR)
(74) Representative: HGF
(86) International application number: PCT/KR2024/016543
(87) International publication number: WO 2025/110514

(57) **Abstract**

Provided is an electronic device. The electronic device comprises: a display, a sensor, a memory for storing one or more computer programs, and a processor communicatively connected to the display, the sensor, and the memory. The computer programs include computer-executable instructions. The instructions, when executed individually or collectively by the one or more processors, may cause the electronic device to: acquire information related to a field of view of a user via the sensor; acquire a two-dimensional image; identify a first portion, to be applied as a background image to a three-dimensional virtual space, of the two-dimensional image; identify a second portion, corresponding to an object of interest, of the two-dimensional image; generate an extended image corresponding to the first portion of the two-dimensional image; apply a first depth to the extended image; generate a three-dimensional virtual image by applying a second depth to the second portion of the two-dimensional image; and display a portion of the three-dimensional virtual image on the basis of the information related to the field of view of the user.

## Description

### [Technical Field]

The disclosure relates to a wearable electronic device displaying a virtual object and a method for controlling the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

An increasing number of services and additional features are being offered through wearable electronic devices, such as augmented reality glasses (AR glasses), virtual reality glasses (VR glasses), and head mounted display (HMD) devices. To meet the needs of various users and raise use efficiency of electronic devices, communication service carriers or device manufacturers are jumping into competitions to develop electronic devices with differentiated and diversified functionalities. Accordingly, various functions that are provided through wearable electronic devices are evolving more and more.

AR glasses or a VR glasses, when worn on the user's head, may provide a realistic experience to the user by displaying virtual images. AR glasses or VR glasses can replace the usability of smartphones in a variety of areas, such as gaming entertainment, education, and social networking services. The user may receive the content of a smartphone and/or real-like content through the AR glasses or VR glasses worn on her head.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problems]

According to an embodiment, an electronic device may comprise a display, a sensor, a processor, and memory storing instructions that, when executed by the processor, enable the electronic device to perform following operations.

According to an embodiment, the instructions may, when executed by the processor, enable the electronic device to obtain, via the sensor, information relating to a field of view of a user.

According to an embodiment, the instructions may, when executed by the processor, enable the electronic device to obtain a two-dimensional (2D) image.

According to an embodiment, the instructions may, when executed by the processor, enable the electronic device to identify a first portion of the 2D image to be applied as a background image of a three-dimensional (3D) virtual space.

According to an embodiment, the instructions may, when executed by the processor, enable the electronic device to identify a second portion of the 2D image corresponding to an object of interest.

According to an embodiment, the instructions may, when executed by the processor, enable the electronic device to generate an expanded image corresponding to the first portion of the 2D image.

According to an embodiment, the instructions may, when executed by the processor, enable the electronic device to generate a 3D virtual image by applying a first depth to the expanded image and a second depth to the second portion of the 2D image.

According to an embodiment, the instructions may, when executed by the processor, enable the electronic device to display a portion of the 3D virtual image based on the information relating to the field of view of the user.

According to an embodiment, a method for controlling an electronic device may comprise obtaining, via a sensor of the electronic device, information relating to a field of view of a user.

According to an embodiment, the method for controlling the electronic device may comprise obtaining a two-dimensional (2D) image.

According to an embodiment, the method for controlling the electronic device may comprise identifying a first portion of the 2D image to be applied as a background image of a three-dimensional (3D) virtual space.

According to an embodiment, the method for controlling the electronic device may comprise identifying a second portion of the 2D image corresponding to an object of interest.

According to an embodiment, the method for controlling the electronic device may comprise generating an expanded image corresponding to the first portion of the 2D image.

According to an embodiment, the method for controlling the electronic device may comprise generating a 3D virtual image by applying a first depth to the expanded image and a second depth to the second portion of the 2D image.

According to an embodiment, the method for controlling the electronic device may comprise displaying a portion of the 3D virtual image based on the information relating to the field of view of the user.

According to an embodiment, in a non-transitory computer-readable recording medium storing one or more programs, the one or more programs may store instructions enabling an electronic device to obtain, via the sensor, information relating to a field of view of a user.

According to an embodiment, the one or more programs may store instructions to enable the electronic device to obtain a two-dimensional (2D) image.

According to an embodiment, the one or more programs may store instructions to enable the electronic device to identify a first portion of the 2D image to be applied as a background image of a three-dimensional (3D) virtual space.

According to an embodiment, the one or more programs may store instructions to enable the electronic device to identify a second portion of the 2D image corresponding to an object of interest.

According to an embodiment, the one or more programs may store instructions to enable the electronic device to generate an expanded image corresponding to the first portion of the 2D image.

According to an embodiment, the one or more programs may store instructions to enable the electronic device to generate a 3D virtual image by applying a first depth to the expanded image and a second depth to the second portion of the 2D image.

According to an embodiment, the one or more programs may store instructions to enable the electronic device to display a portion of the 3D virtual image based on the information relating to the field of view of the user.

According to an embodiment, an electronic device may include a display, a sensor for sensing a user's gaze as at least part of field of view information, memory for storing a virtual space including a three-dimensional (3D) background area, and a processor operatively connected to the sensor and the memory.

According to an embodiment, the memory may store instructions that, when executed by the processor, enable the electronic device to obtain a two-dimensional (2D) image.

According to an embodiment, the memory may store instructions that, when executed by the processor, enable the electronic device to generate an expanded image further including an image portion generated in an outward direction of the 2D image so that an image is continuous at a boundary corresponding to at least one of edges of the 2D image, based on an attribute of the 2D image.

According to an embodiment, the memory may store instructions that, when executed by the processor, enable the electronic device to make a setting to include the expanded image in at least a portion of the 3D background area.

According to an embodiment, the memory may store instructions that, when executed by the processor, enable the electronic device to display at least a portion of the virtual space including the set 3D background area, based on the field of view information.

According to an embodiment, a head-mountable display (HMD) device may include a display, a sensor configured to detect a gaze of a user of the HMD as part of field of view information, memory configured to store image information indicating a virtual space including a 3D background area, and a processor operatively connected to the display, the sensor, and the memory.

According to an embodiment, the memory may store instructions that, when executed by the processor, enable the head-mountable display device to obtain a 2D image.

According to an embodiment, the memory may store instructions that, when executed by the processor, enable the head-mountable display device to display at least a portion of the virtual space through the display so that an expanded image corresponding to the 2D image is included in at least a portion of the 3D background area.

According to an embodiment, an electronic device may include a display, a sensor for sensing a user's gaze as at least part of field of view information, memory for storing a virtual space including a 3D background area, and a processor.

According to an embodiment, the memory may store instructions that, when executed by the processor, enable the electronic device to obtain a 2D image.

According to an embodiment, the memory may store instructions that, when executed by the processor, enable the electronic device to recognize a background area and an object area in the 2D image.

According to an embodiment, the memory may store instructions that, when executed by the processor, enable the electronic device to separate the object area from the 2D image.

According to an embodiment, the memory may store instructions that, when executed by the processor, enable the electronic device to generate an expanded image further including an image portion generated outside the background area to continue at a boundary of the background area, based on an attribute of the background area.

According to an embodiment, the memory may store instructions that, when executed by the processor, enable the electronic device to make a setting to include the expanded image in at least a portion of the 3D background area.

According to an embodiment, the memory may store instructions that, when executed by the processor, enable the electronic device to dispose the object area between a point set in the virtual space and the 3D background area in relation to the field of view information.

According to an embodiment, the memory may store instructions that, when executed by the processor, enable the electronic device to display at least a portion of the virtual space including the set 3D background area and the disposed object area, based on the field of view information.

A method for controlling an electronic device according to an embodiment may include obtaining a 2D image.

According to an embodiment, the method may further include generating, based on an attribute of the 2D image, an expanded image including an image portion generated in an outward direction of the 2D image so that the image is continuous at a boundary corresponding to at least one of edges of the 2D image.

According to an embodiment, the method may further include setting the expanded image to be included in at least a portion of the 3D background area.

According to an embodiment, the method may further include displaying at least a portion of the virtual space including the set 3D background area, based on the field of view information.

According to an embodiment, a method for controlling the head-mountable display (HMD) device may include obtaining a 2D image.

According to an embodiment, the method may further include displaying, through a display, at least a portion of the virtual space so that an expanded image corresponding to the 2D image is included in at least a portion of the 3D background area.

According to an embodiment, the method for controlling the electronic device may comprise obtaining a two-dimensional (2D) image.

According to an embodiment, the method may further include recognizing a background area and an object area in the 2D image.

According to an embodiment, the method may further include separating the object area from the 2D image.

According to an embodiment, the method may further include generating an expanded image including an image portion generated outside the background area to continue at a boundary of the background area, based on an attribute of the background area.

According to an embodiment, the method may further include setting the expanded image to be included in at least a portion of the 3D background area.

According to an embodiment, the method may further include disposing the object area between a point set in the virtual space and the 3D background area in relation to the field of view information.

According to an embodiment, the method may further include displaying at least a portion of the virtual space including the set 3D background area and the disposed object area, based on the field of view information.

According to an embodiment, in a non-transitory computer-readable recording medium storing one or more programs, the one or more programs may store instructions enabling an electronic device to obtain a 2D image.

According to an embodiment, the one or more programs may store instructions enabling the electronic device to generate an expanded image further including an image portion generated in an outward direction of the 2D image so that an image is continuous at a boundary corresponding to at least one of edges of the 2D image, based on an attribute of the 2D image.

According to an embodiment, the one or more programs may store instructions enabling the electronic device to make a setting to include the expanded image in at least a portion of the 3D background area.

According to an embodiment, the one or more programs may store instructions enabling the electronic device to display at least a portion of the virtual space including the set 3D background area, based on the field of view information.

According to an embodiment, in a non-transitory computer-readable recording medium storing one or more programs, the one or more programs may store instructions enabling a head-mountable display (HMD) device to obtain a 2D image.

According to an embodiment, the one or more programs may store instructions enabling the head-mountable display device to display at least a portion of the virtual space through the display so that an expanded image corresponding to the 2D image is included in at least a portion of the 3D background area.

According to an embodiment, in a non-transitory computer-readable recording medium storing one or more programs, the one or more programs may store instructions enabling an electronic device to obtain a 2D image.

According to an embodiment, the one or more programs may store instructions enabling the electronic device to recognize a background area and an object area in the 2D image.

According to an embodiment, the one or more programs may store instructions enabling the electronic device to separate the object area from the 2D image.

According to an embodiment, the one or more programs may store instructions enabling the electronic device to generate an expanded image further including an image portion generated outside the background area to continue at a boundary of the background area, based on an attribute of the background area.

According to an embodiment, the one or more programs may store instructions enabling the electronic device to make a setting to include the expanded image in at least a portion of the 3D background area.

According to an embodiment, the one or more programs may store instructions enabling the electronic device to dispose the object area between a point set in the virtual space and the 3D background area in relation to the field of view information.

According to an embodiment, the one or more programs may store instructions enabling the electronic device to display at least a portion of the virtual space including the set 3D background area and the disposed object area, based on the field of view information.

### [Brief Description of Drawings]

The above and other aspects, features, and advantages of certain embodiments of the disclosure will be more apparent from the following description taken in conjunction with the accompanying drawings, in which:
FIG. 1A is a block diagram illustrating an electronic device in a network environment according to an embodiment of the disclosure;
FIG. 1B is a block diagram illustrating an operation of obtaining a result from a generative artificial intelligence (AI) of an electronic device according to an embodiment of the disclosure;
FIG. 2 is a perspective view illustrating an internal configuration of a wearable electronic device according to an embodiment of the disclosure;
FIG. 3A is a front perspective view illustrating a wearable electronic device according to an embodiment of the disclosure;
FIG. 3B is a rear perspective view illustrating a wearable electronic device according to an embodiment of the disclosure;
FIG. 4 is a perspective view illustrating a wearable electronic device according to an embodiment of the disclosure;
FIG. 5 is a flowchart illustrating an operation of displaying an expanded image generated based on a 2D image in a 3D background area by an electronic device according to an embodiment of the disclosure;
FIG. 6A is a flowchart illustrating an operation of generating an expanded image based on a 2D image by an electronic device according to an embodiment of the disclosure;
FIG. 6B is a view illustrating an operation of generating an expanded image based on a 2D image by an electronic device according to an embodiment of the disclosure;
FIG. 7A is a flowchart illustrating an operation of generating an expanded image in which two opposite ends are connected to each other, based on a 2D image by an electronic device according to an embodiment of the disclosure;
FIG. 7B is a view illustrating an operation of generating an expanded image in which two opposite ends are connected to each other, based on a 2D image by an electronic device according to an embodiment of the disclosure;
FIG. 8A is a view illustrating an operation of connecting two opposite ends of an expanded image by an electronic device according to an embodiment of the disclosure;
FIG. 8B is a view illustrating an operation of connecting two opposite ends of an expanded image by an electronic device according to an embodiment of the disclosure;
FIG. 9 is a view illustrating an operation of generating a ceiling and a floor of an expanded image by an electronic device according to an embodiment of the disclosure;
FIG. 10 is a flowchart illustrating an operation of disposing each object included in an expanded image, at a different depth, by an electronic device according to an embodiment of the disclosure;
FIG. 11 is a flowchart illustrating an operation of disposing each object included in an expanded image, at a different depth, by an electronic device according to an embodiment of the disclosure;
FIG. 12A is a view illustrating an operation of disposing each object included in an expanded image, at a different depth, by an electronic device according to an embodiment of the disclosure;
FIG. 12B is a view illustrating a depth of a 3D space according to an embodiment of the disclosure;
FIG. 12C is a view illustrating objects of an expanded image disposed at different depths according to an embodiment of the disclosure;
FIG. 12D is a view illustrating objects of an expanded image disposed at different depths according to an embodiment of the disclosure;
FIG. 13A is a view illustrating an operation of giving an interaction to a disposed object by an electronic device according to an embodiment of the disclosure;
FIG. 13B is a view illustrating an operation of giving an interaction to a disposed object by an electronic device according to an embodiment of the disclosure;
FIG. 13C is a view illustrating an operation of giving an interaction to a disposed object by an electronic device according to an embodiment of the disclosure;
FIG. 13D is a view illustrating an operation of giving an interaction to a disposed object by an electronic device according to an embodiment of the disclosure;
FIG. 14 is a view illustrating an operation of giving an interaction to a disposed object by an electronic device according to an embodiment of the disclosure;
FIG. 15 is a view illustrating an operation of giving an interaction to a disposed object by an electronic device according to an embodiment of the disclosure;
FIG. 16 is a flowchart illustrating an operation of mapping an audio with a disposed object by an electronic device according to an embodiment of the disclosure;
FIG. 17A is a view illustrating an operation of mapping an audio with a disposed object by an electronic device according to an embodiment of the disclosure;
FIG. 17B is a view illustrating an operation of mapping an audio with a disposed object by an electronic device according to an embodiment of the disclosure;
FIG. 17C is a view illustrating an operation of mapping an audio with a disposed object by an electronic device according to an embodiment of the disclosure;
FIG. 17D is a view illustrating an operation of mapping an audio with a disposed object by an electronic device according to an embodiment of the disclosure;
FIG. 18A is a view illustrating an operation of changing a disposed object by an electronic device according to an embodiment of the disclosure;
FIG. 18B is a view illustrating an operation of changing a disposed object by an electronic device according to an embodiment of the disclosure;
FIG. 18C is a view illustrating an operation of changing a disposed object by an electronic device according to an embodiment of the disclosure;
FIG. 19 is a view illustrating an operation of changing a disposed object by an electronic device according to an embodiment of the disclosure;
FIG. 20A is a view illustrating an operation of changing a disposed object by an electronic device according to an embodiment of the disclosure;
FIG. 20B is a view illustrating an operation of changing a disposed object by an electronic device according to an embodiment of the disclosure;
FIG. 20C is a view illustrating an operation of changing a disposed object by an electronic device according to an embodiment of the disclosure;
FIG. 21A is a view illustrating an operation of disposing an object on a lock screen or an always-on display (AOD) screen by an electronic device according to an embodiment of the disclosure;
FIG. 21B is a view illustrating an operation of disposing an object on a lock screen or an AOD screen by an electronic device according to an embodiment of the disclosure;
FIG. 22 is a view illustrating a virtual space displayed according to rotation by an electronic device according to an embodiment of the disclosure;
FIG. 23A is a view illustrating an operation of displaying an image generated based on a keyword as a 3D virtual image in an external electronic device, by an electronic device according to an embodiment of the disclosure; and
FIG. 23B is a view illustrating an operation of applying an image changed based on a keyword in state in which a 3D virtual image is displayed, to an external electronic device, by an electronic device according to an embodiment of the disclosure.

### [Mode for the Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, description of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include computer-executable instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

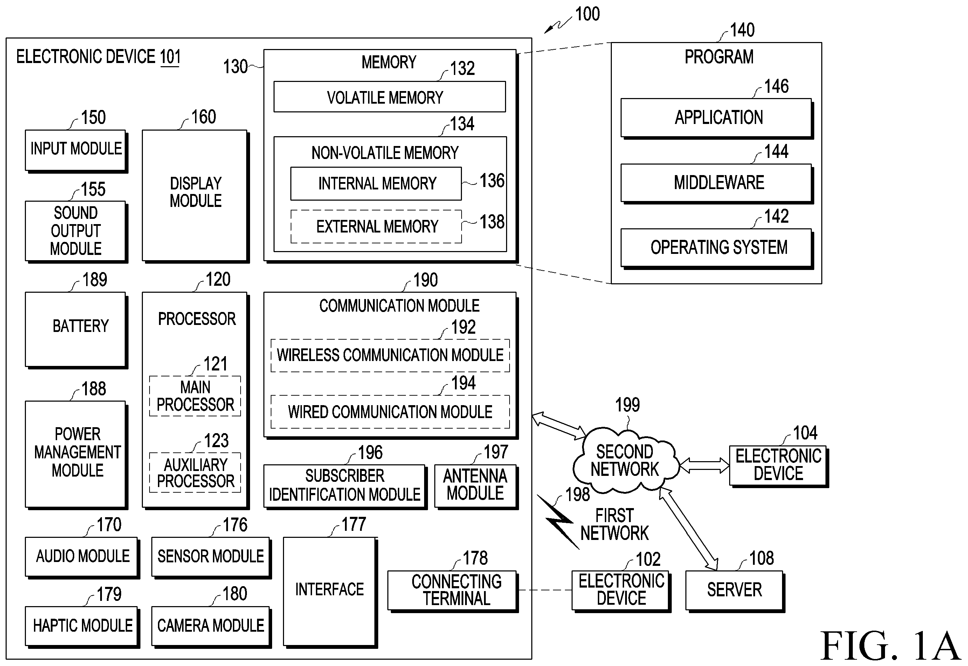

FIG. 1A is a block diagram illustrating an electronic device in a network environment according to an embodiment of the disclosure.

Referring to FIG. 1A, an electronic device 101 in a network environment 100 may communicate with at least one of an external electronic device 102 via a first network 198 (e.g., a short-range wireless communication network), or an external electronic device 104 or a server 108 via a second network 199 (e.g., a long-range wireless communication network). According to an embodiment, the electronic device 101 may communicate with the external electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a fifth-generation (5G) network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or health-care) based on 5G communication technology or IoT-related technology.

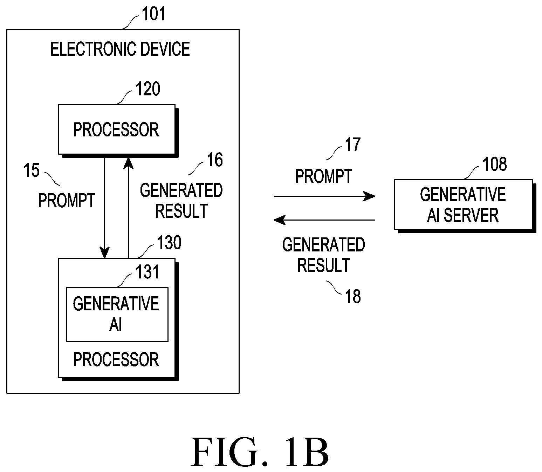

FIG. 1B is a block diagram illustrating an operation of obtaining a result from a generative AI of an electronic device according to an embodiment of the disclosure.

Referring to FIG. 1B, the electronic device 101 may include a processor 120 (e.g., the processor 120 of FIGS. 1A and 1B) and memory 130 (e.g., the memory 130 of FIGS. 1A and 1B).

According to an embodiment, the processor 120 may obtain the generated results 16 and 18 using a generative AI 131 stored in the memory 130 or using a generative AI server 108 (e.g., the server 108 of FIGS. 1A and 1B) that is an external electronic device. According to an embodiment, the generative AI server 108 may be a generative AI stored in an external electronic device that is a terminal device.

According to an embodiment, the processor 120 may transfer a prompt 15 for generating an expanded image to the generative AI 131 stored in the memory 130 and receive a generation result 16 corresponding to the prompt 15 from the generative AI 131. For example, the generated result 16 may be an expanded image obtained based on a 2D image through out-painting and/or in-painting technology.

According to an embodiment, the processor 120 may transfer a prompt 17 for generating an expanded image to the generative AI server 108 that is an external electronic device, and may receive a generation result 18 corresponding to the prompt 17 from the generative AI server 108. For example, the generated result 18 may be an expanded image obtained based on a 2D image through out-painting and/or in-painting technology.

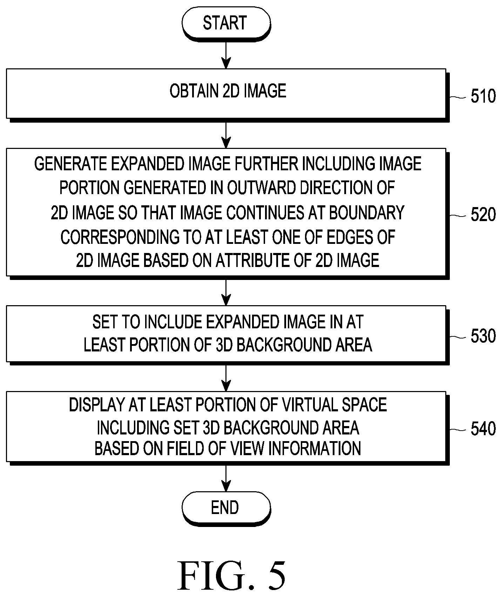

According to an embodiment, the operation of generating an expanded image is described with reference to FIGS. 5, 6A,6B,7A,7B,8A, 8B and 9.

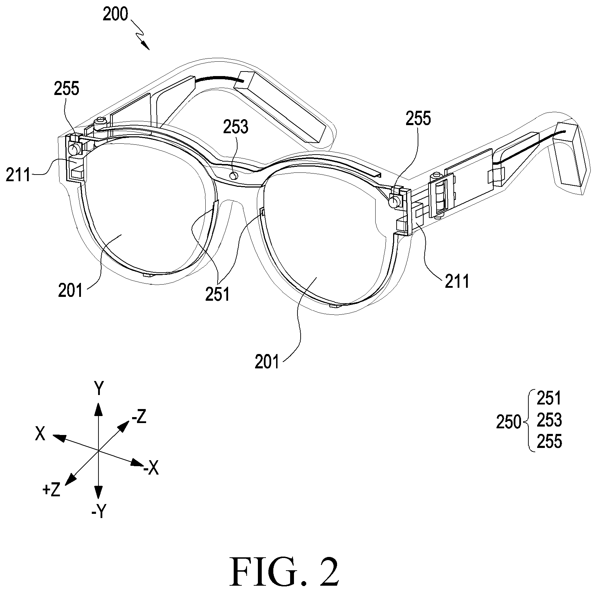

FIG. 2 is a perspective view illustrating an internal configuration of a wearable electronic device according to an embodiment of the disclosure.

Referring to FIG. 2, a wearable electronic device 200 according to an embodiment may include at least one of a light output module 211, a display member 201, and a camera module 250.

According to an embodiment, the light output module 211 may include a light source capable of outputting an image and a lens guiding the image to the display member 201. According to an embodiment, the light output module 211 may include at least one of a liquid crystal display (LCD), a digital mirror device (DMD), a liquid crystal on silicon (LCoS), an organic light emitting diode (OLED), or a micro light emitting diode (micro LED).

According to an embodiment, the display member 201 may include an optical waveguide (e.g., a waveguide). According to an embodiment, the image output from the light output module 211 incident on one end of the optical waveguide may propagate inside the optical waveguide and be provided to the user. According to an embodiment, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 211 to the user's eyes using at least one diffractive element or reflective element.

According to an embodiment, the camera module 250 may capture a still image and/or a video. According to an embodiment, the camera module 250 may be disposed in a lens frame and may be disposed around the display member 201.

According to an embodiment, a first camera module 251 may capture and/or recognize the trajectory of the user's eye (e.g., pupil or iris) or gaze. According to an embodiment, the first camera module 251 may periodically or aperiodically transmit information related to the trajectory of the user's eye or gaze (e.g., trajectory information) to the processor (e.g., the processor 120 of FIGS. 1A and 1B).

According to an embodiment, the second camera module 253 may capture an external image.

According to an embodiment, a third camera module 255 may be used for hand detection and tracking, and recognition of the user's gesture (e.g., hand motion). According to an embodiment, the third camera module 255 may be used for 3 degrees of freedom (3DoF) or 6DoF head tracking, location (space, environment) recognition and/or movement recognition. The second camera module 253 may also be used for hand detection and tracking and recognition of the user's gesture according to an embodiment. According to an embodiment, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

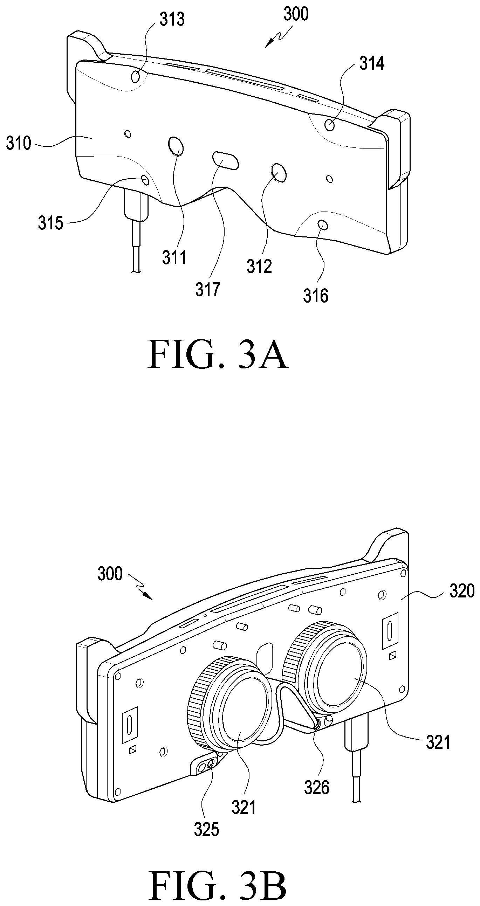

FIG. 3A is a front perspective view illustrating a wearable electronic device according to an embodiment of the disclosure.

FIG. 3B is a rear perspective view illustrating a wearable electronic device according to an embodiment of the disclosure.

Referring to FIGS. 3A and 3B, in an embodiment, camera modules 311, 312, 313, 314, 315, and 316 and/or a depth sensor 317 for obtaining information related to the ambient environment of a wearable electronic device 300 may be disposed on a first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, location (space or environment) recognition, and/or movement recognition. In an embodiment, the camera modules 311 and 312 may be used for hand detection and tracking and recognition of the user's gesture.

In an embodiment, the depth sensor 317 may be configured to transmit a signal and receive a signal reflected from an object and be used for identifying the distance to the object, such as time of flight (TOF). Alternatively or additionally to the depth sensor 217, the camera modules 213, 214, 215, and 216 may identify the distance to the object.

According to an embodiment, camera modules 325 and 326 for face recognition and/or a display 321 (and/or lens) may be disposed on the second surface 320 of the housing.

In an embodiment, the face recognition camera modules 325 and 326 adjacent to the display may be used for recognizing the user's face or may recognize and/or track both eyes of the user.

In an embodiment, the display 321 (and/or lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3A and 3B, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide the user experience based on augmented reality, virtual reality, and/or mixed reality while worn on the user's head.

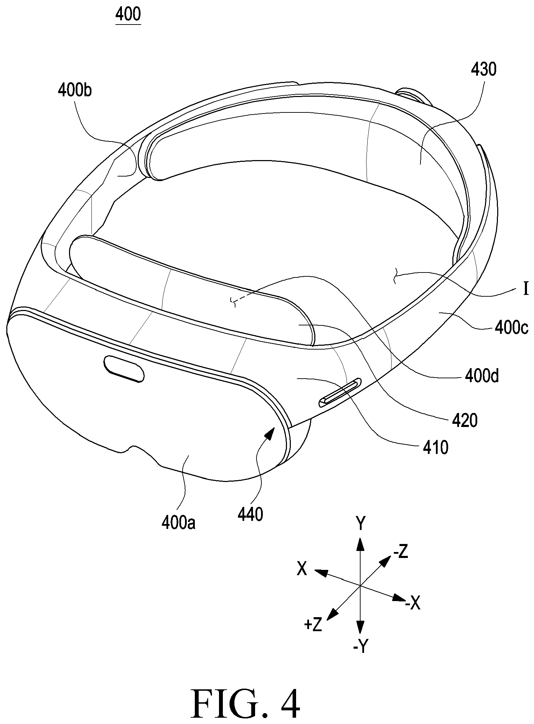

FIG. 4 is another perspective view illustrating an electronic device according to an embodiment of the disclosure.

Referring to FIG. 4, an electronic device 400 may be a head mounting device (HMD) capable of providing an image in front of the user's eyes. The configuration of the electronic device 400 of FIG. 4 may be identical in whole or part to the configuration of the electronic device 200 of FIG. 2.

According to an embodiment, the electronic device 400 may form the exterior of the electronic device 400 and may include housings 410, 420, and 430 that may provide a space in which components of the electronic device 400 may be disposed.

According to an embodiment, the electronic device 400 may include a first housing 410 that may surround at least a portion of the user's head. According to an embodiment, the first housing 410 may include a first surface 400a facing the outside (e.g., +Z direction) of the electronic device 400.

According to an embodiment, the first housing 410 may surround at least a portion of the inner space I. For example, the first housing 410 may include a second surface 400b facing the inner space I of the electronic device 400 and a third surface 400c opposite to the second surface 400b. According to an embodiment, the first housing 410 may be coupled with the third housing 430 and may be formed in a closed loop shape surrounding the inner space I.

According to an embodiment, the first housing 410 may surround at least some of the components of the electronic device 400. For example, a light output module and a circuit board may be disposed within the first housing 410.

According to an embodiment, the electronic device 400 may include one display member 440 corresponding to the left eye and the right eye. The display member 440 may be disposed in the first housing 410. The configuration of the display member 440 of FIG. 5 may be identical in whole or part to the configuration of the display member 201 of FIG. 2.

According to an embodiment, the electronic device 400 may include a second housing 420 that may be seated on the user's face. According to an embodiment, the second housing 420 may include a fourth surface 400d that may at least partially face the user's face. According to an embodiment, the fourth surface 400d may be a surface in a direction (e.g., -Z direction) toward the internal space I of the electronic device 400. According to an embodiment, the second housing 420 may be coupled with the first housing 410.

According to an embodiment, the electronic device 400 may include a third housing 430 that may be seated on the back of the user's head. According to an embodiment, the third housing 430 may be coupled with the first housing 410. According to an embodiment, the third housing 430 may surround at least some of the components of the electronic device 400. For example, a battery (e.g., the battery 189 of FIGS. 1A and 1B) may be disposed in the third housing 430.

FIG. 5 is a flowchart illustrating an operation of displaying an expanded image generated based on a 2D image in a 3D background area by an electronic device according to an embodiment of the disclosure.

In the following embodiment, the operations may be sequentially performed, but may be performed non-sequentially. For example, the order of the operations may be changed, and at least two operations may be performed in parallel.

Referring to FIG. 5, in operation 510, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may obtain a 2D image.

According to an embodiment, the electronic device may include a display. For example, the electronic device may include a smartphone, a tablet PC, smart glasses, a smart contact lens, or a head-mountable display device.

According to an embodiment, the electronic device may receive a 2D image from an external electronic device. For example, the electronic device may receive the 2D image through an external electronic device associated with a user account of the electronic device.

According to an embodiment, the electronic device may obtain a 2D image stored in memory (e.g., the memory 130 of FIGS. 1A and 1B) of the electronic device. For example, the 2D image may be captured through a camera (e.g., the camera module 180 of FIGS. 1A and 1B) included in the electronic device, obtained through screen capture, or downloaded to be stored in memory.

According to an embodiment, in operation 520, the electronic device may generate an expanded image further including an image portion generated in an outward direction of the 2D image so that the image is continuous at a boundary corresponding to at least one of edges of the 2D image, based on the attribute of the 2D image.

According to an embodiment, the electronic device may obtain an image extended as output data using the 2D image as input data through the artificial intelligence model. For example, the AI model may be a generative AI model. According to an embodiment, the artificial intelligence model may be stored in memory (e.g., the memory 130 of FIGS. 1A and 1B) of the electronic device, or may be stored in an external electronic device (e.g., a server) (e.g., the server 108 of FIGS. 1A and 1B).

According to an embodiment, the electronic device may obtain an expanded image based on a 2D image through an out-painting technology. Out-painting technology is a technology that generates an outer area beyond the edge of an image through an artificial intelligence model.

According to an embodiment, the electronic device may obtain the expanded image using the 2D image based on the field of view information.

According to an embodiment, the field of view information may include the user's gaze direction and/or a field of view (FOV). According to an embodiment, the field of view information may be obtained through a sensor (e.g., the sensor module 176 of FIGS. 1A and 1B) of the electronic device. For example, the sensor may include a camera for detecting movement of the user's eyes and/or a motion sensor for detecting movement of the user's head.

For example, the electronic device may set the size of the out-painting area (e.g., the image portion) to be larger than the FOV of the user. According to an embodiment, the electronic device may generate an image portion corresponding to a size determined based on at least one of the size or direction of the field of view corresponding to the field of view information.

According to an embodiment, the electronic device may be extended in at least two directions of an edge of a 2D image that is an original image.

According to an embodiment, the electronic device may generate the expanded image such that a generated image portion includes an area extending from a first boundary of the 2D image in a first direction and an area extending from a second boundary different from the first boundary in a second direction different from the first direction. For example, the electronic device may generate an image expanded to include an image portion extended in the left direction from the left boundary of the 2D image and an image portion extended in the right direction from the right boundary of the 2D image.

According to an embodiment, as part of generating the expanded image, the electronic device may generate an area corresponding to a first range belonging to a main movable range of the field of view by performing out-painting based on the 2D image, at least based on the field of view information. The main movable range of the field of view may include a range of the field of view that may be changed based on the movement of the user's eye or the movement of the head. For example, the main movable range of the field of view may be a range of 240 degrees in total including 120 degrees left and 120 degrees right with respect to the front field of view of the user. This is merely an example, and the disclosure is not limited thereto.

According to an embodiment, the electronic device may generate an area corresponding to a second range different from the first range, by performing in-painting based on the image generated in the area corresponding to the first range, at least based on the field of view information. The in-painting technology is a technology for filling a damaged or empty part of the image or deleting an object included in the image through an artificial intelligence model. According to an embodiment, the electronic device may generate the image of the area corresponding to the second range based on images of two opposite ends of the area corresponding to the first range. According to an embodiment, the expanded image may include a 360-degree image. According to an embodiment, the 360-degree image may not include a ceiling image and a floor image.

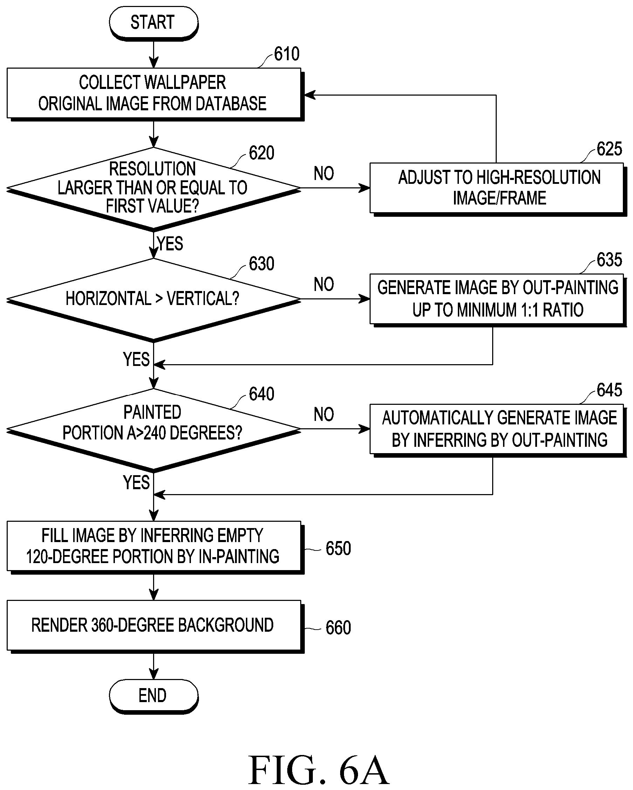

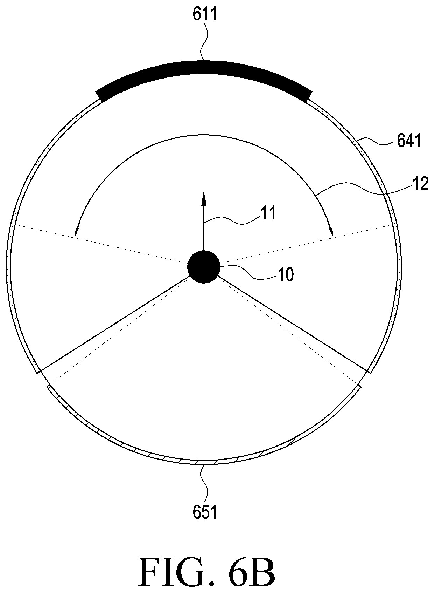

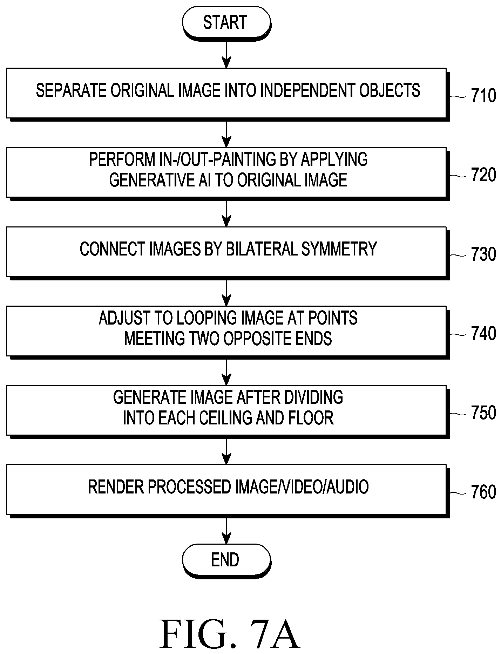

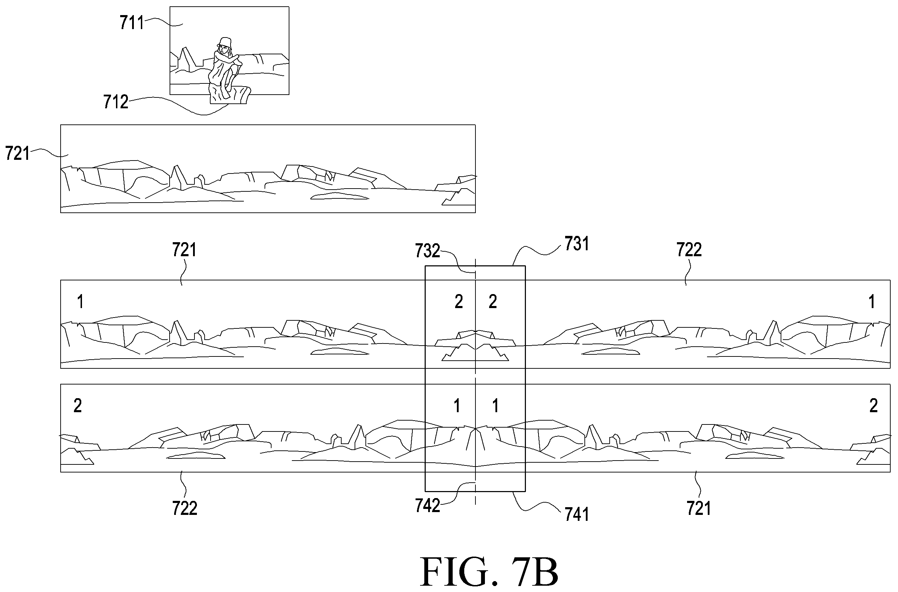

According to an embodiment, an operation of obtaining an expanded image by performing out-painting and in-painting based on field of view information is described with reference to FIGS. 6A, 6B, 7A and 7B.

According to an embodiment, the electronic device may generate the image portion by connecting the two opposite boundaries of the image generated by out-painting without performing in-painting. According to an embodiment, the expanded image may include a 360-degree image. According to an embodiment, the 360-degree image may not include a ceiling image and a floor image.

For example, the electronic device may connect the left and right boundaries of the image portion generated by out-painting by bilateral symmetry. For example, as part of generating the expanded image, the electronic device may generate the image portion to be symmetrical with respect to at least one of a virtual line or a boundary line at one or more points of the image portion.

According to an embodiment, an operation of connecting boundaries of an image generated through bilateral symmetry is described with reference to FIGS. 7A and 7B.

According to an embodiment, the electronic device may adjust the left and right boundaries of the image portion generated by out-painting by fade-in/out processing. For example, as part of generating the expanded image, the electronic device may generate the image portion by fade-in/out processing with respect to at least one of a virtual line or a boundary line at one or more points of the image portion. The fade-in/out processing may be processing the images of two opposite boundary areas to be naturally connected by adjusting the position and overlapping them, or by repeatedly adjusting the position and overlapping them.

According to an embodiment, the electronic device may adjust the left and right boundaries of the image portion generated by out-painting by bilateral symmetry and then fading-in/out the connected areas.

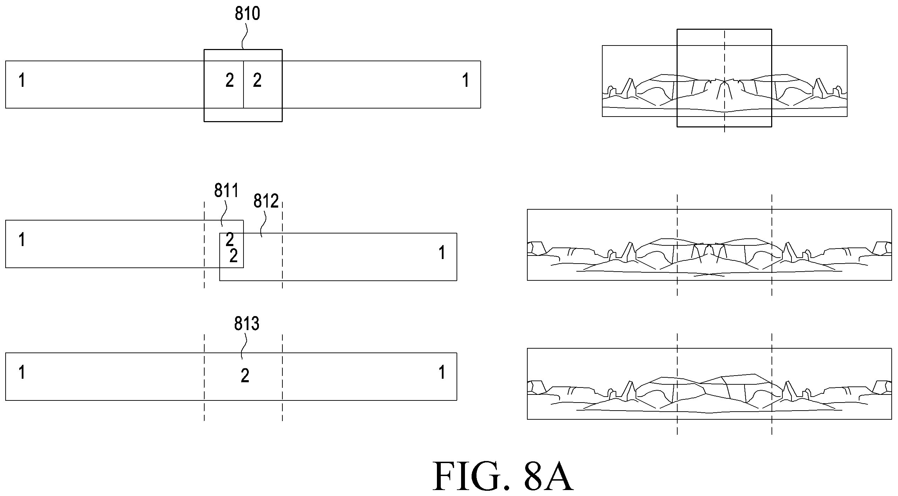

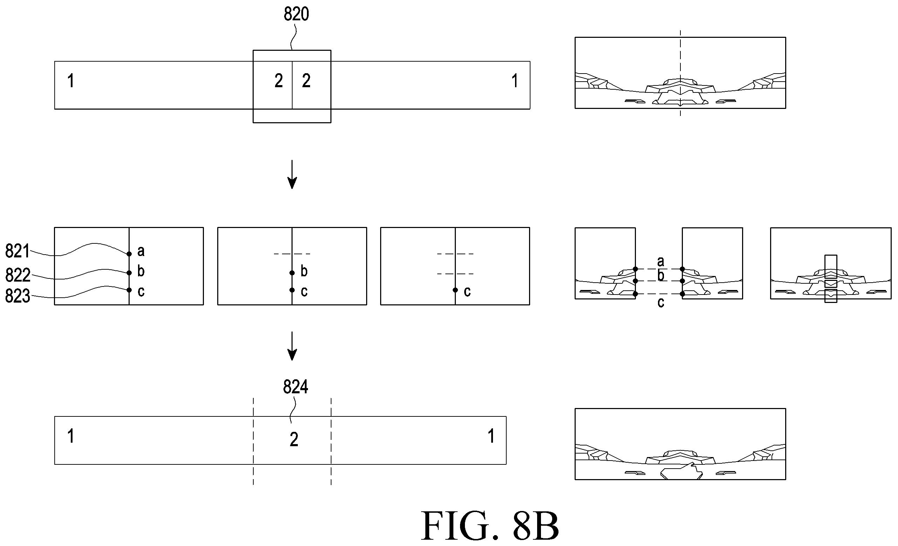

According to an embodiment, an operation of connecting boundaries of an image generated through fade-in/out processing is described with reference to FIGS. 8A and 8B.

According to an embodiment, the electronic device may store a virtual space including a 3D background area. According to an embodiment, the virtual space may include a spherical or hemispherical shape. According to an embodiment, the 3D background area may be included in a boundary surface indicating the maximum size of the virtual space. For example, the 3D background area may be included in the boundary surface of the spherical or hemispherical virtual space.

According to an embodiment, at least a portion of the 3D background area may be configured in a curved surface shape having substantially the same distance from a point set in the virtual space. For example, the point set in the virtual space may be a center point of the virtual space. The center point of the virtual space may be the location of the user in the virtual space.

According to an embodiment, the electronic device may correct the expanded image to correspond to the curved surface shape. For example, the electronic device may correct the expanded image to correspond to the 3D background area. According to an embodiment, the electronic device may correct the expanded image to correspond to the shape of the virtual space.

According to an embodiment, although it has been described above that the electronic device generates the expanded image, the electronic device may generate the expanded image or may receive the expanded image generated by an external electronic device.

For example, the electronic device may transmit a 2D image to a second external electronic device (e.g., a server) through a communication module (e.g., the communication module 190 of FIGS. 1A and 1B). According to an embodiment, the 2D image may be received from a first external electronic device (e.g., an electronic device), obtained through a camera of the electronic device, or stored in memory.

According to an embodiment, the electronic device may receive the expanded image from the second external electronic device through the communication module in response to the transmission. The expanded image may be an expanded image from the 2D image.

According to an embodiment, the expanded image received from the external electronic device may be generated by the second external electronic device through the same operation as at least some of the expanded image generation operations of the electronic device described above.

According to an embodiment, as part of generating the expanded image, the electronic device may transfer, through the communication module, a generation command prompt for generating the expanded image to the external electronic device (e.g., a server). According to an embodiment, the electronic device may receive the expanded image generated based on the generation command prompt from the external electronic device.

According to an embodiment, the generation command prompt may store instructions for generating an expanded image further including an image portion generated in an outward direction of the 2D image so that the image is continuous at a boundary corresponding to at least one of edges of the 2D image, based on the attribute of the 2D image.

According to an embodiment, the generation command prompt may store instructions for generating an image portion with a size determined based on at least one of the size or direction of the field of view corresponding to the field of view information.

According to an embodiment, the generation command prompt may store instructions for generating the expanded image such that a generated image portion includes an area extending from a first boundary of the 2D image in a first direction and an area extending from a second boundary different from the first boundary in a second direction different from the first direction.

According to an embodiment, the generation command prompt may store instructions for correcting the expanded image to correspond to the curved surface shape. According to an embodiment, the curved surface shape may be the form of the 3D background area of the virtual space.

According to an embodiment, the generation command prompt may store instructions for, as part of generating the expanded image, generating an area corresponding to a first range belonging to a main movable range of the field of view by performing out-painting based on the 2D image, and generating an area corresponding to a second range, which is different from the first range, by performing in-painting, based on an image generated in the area corresponding to the first range, at least based on the information relating to the field of view.

According to an embodiment, the generation command prompt may store instructions for, as part of generating the expanded image, generating the image portion to be symmetrical with respect to at least one of a virtual line or a boundary line at one or more points of the image portion.

According to an embodiment, the generation command prompt may store instructions for, as part of generating the expanded image, generating the image portion by fade-in/out processing with respect to at least one of a virtual line or a boundary line at one or more points of the image portion.

According to an embodiment, the electronic device may generate the expanded image by loading images of a similar category to the 2D image, which is the original image, from the memory. For example, the electronic device may generate the expanded image by disposing the 2D image and the images of similar categories in several layouts.

According to an embodiment, in operation 530, the electronic device may set the expanded image to be included in at least a portion of the 3D background area.

According to an embodiment, when the expanded image does not include the ceiling image and the floor image, the electronic device may set the expanded image to be included in an area other than the ceiling area and the floor area of the 3D background area. According to an embodiment, when the expanded image includes the ceiling image and the floor image, the expanded image may be set to be included in the 3D background area.

According to an embodiment, in operation 540, the electronic device may display at least a portion of the virtual space including the set 3D background area, based on the field of view information.

According to an embodiment, the electronic device may display the expanded image at least in the FOV based on the user's field of view information. According to an embodiment, the electronic device may display the expanded image so that the 2D image, which is the original image, is disposed in front of the user's field of view based on the user's field of view information.

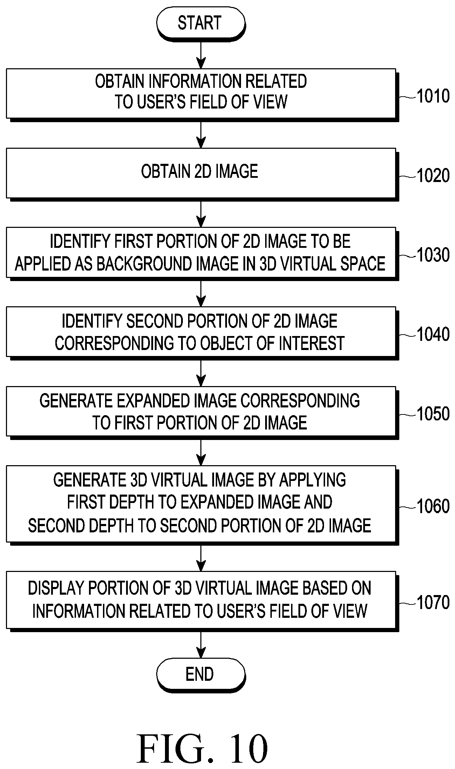

According to an embodiment, the electronic device may separate the object from the 2D image, may display the expanded image in the 3D background area, and may display the separated object between the user and the 3D background area in the virtual space. An operation of displaying a separated object according to an embodiment is described with reference to FIGS. 10, 11, 12A, 12B, 12C, 12D, 13A, 13B, 13C, 13D, 14 and 15.

FIG. 6A is a flowchart illustrating an operation of generating an expanded image based on a 2D image by an electronic device according to an embodiment of the disclosure.

FIG. 6B is a view illustrating an operation of generating an expanded image based on a 2D image by an electronic device according to an embodiment of the disclosure.

In the following embodiment, the operations may be sequentially performed, but may be performed non-sequentially. For example, the order of the operations may be changed, and at least two operations may be performed in parallel.

Referring to FIG. 6A, in operation 610, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may collect an original background (wallpaper) image from a database.

According to an embodiment, the electronic device may receive a 2D image that is an original image (or a background original image) from an external electronic device. For example, the electronic device may receive the 2D image through an external electronic device (e.g., a database) associated with a user account of the electronic device.

According to an embodiment, the electronic device may obtain the original image stored in memory (e.g., the memory 130 of FIGS. 1A and 1B) of the electronic device. For example, the 2D image which is the original image may be captured through a camera (e.g., the camera module 180 of FIGS. 1A and 1B) included in the electronic device, obtained through screen capture, or downloaded to be stored in memory.

According to an embodiment, in operation 620, the electronic device may identify whether the resolution of the original image is larger than or equal to a first value. For example, the electronic device may identify whether the resolution of the original image is 4k or more. When an expanded image is obtained through out-painting and/or in-painting, an incomplete result is obtained if the resolution of the original image is low, and thus the electronic device may identify the resolution of the original image.

According to an embodiment, when the resolution is less than the first value (No in operation 620), in operation 625, the electronic device may adjust to a high-resolution image (or frame).

According to an embodiment, the electronic device may obtain a high-resolution image through an artificial intelligence model trained to output a high-resolution image from a low-resolution image.

According to an embodiment, the electronic device may use a single-frame super resolution (SFSR) method for the memory capacity of the virtual space. The SFSR method is a method for obtaining a single high-resolution image by matching a plurality of low-resolution images, and may repeatedly perform machine learning and similarity estimation techniques.

According to an embodiment, when the original image is a video, the electronic device may use a multi-frame super resolution (MFSR) method. Although motion estimation is accurate and performs well, it is difficult to implement it in real time due to motion estimation and repetitive estimation operations of multiple images, so the MFSR method may operate in a manner to store images in sequence and list the frames in chronological order in a cylindrical space.

According to an embodiment, when the resolution is equal to or larger than a first value (Yes in operation 620), in operation 630, the electronic device may identify whether the horizontal length of the original image is larger than the vertical length.

According to an embodiment, when the vertical length of the original image is larger than the horizontal length (No in operation 630), in operation 635, the electronic device may generate an image by out-painting up to a minimum 1:1 ratio.

According to an embodiment, the electronic device may generate an image in two opposite side directions from two opposite boundary areas of the original image. According to an embodiment, the electronic device may generate an image in one direction from one side boundary area of the original image.

According to an embodiment, when the horizontal length of the original image is larger than the vertical length (Yes in operation 630), in operation 640, the electronic device may identify whether the painted portion exceeds 240 degrees.

According to an embodiment, the electronic device may generate an image by out-painting the original image. According to an embodiment, the electronic device may generate an image to correspond to the curved surface shape of the virtual space. For example, the curved surface shape may have substantially the same distance between the user and any one point of the curved surface shape.

According to an embodiment, the electronic device may identify whether the angle between the user and a straight line connecting points of two opposite boundaries of the image generated through out painting exceeds 240 degrees. According to an embodiment, 240 degrees is merely an example of a set range and the disclosure is not limited thereto.

According to an embodiment, when the painted portion does not exceed 240 degrees (No in operation 640), in operation 645, the electronic device may automatically generate an image by inferring by an out-painting scheme.

According to an embodiment, the electronic device may generate an image by performing out-painting up to a set range and performing in-painting on the remaining areas based on two opposite boundary areas of the image generated through out-painting.

According to an embodiment, as illustrated in FIG. 6B, the electronic device may perform out-painting to additionally generate an image in both side directions of an original image 611 disposed in the front gaze direction 11 of the user 10.

According to an embodiment, when an angle between the user 10 and a straight line connecting two opposite boundaries of a generated image 641 is within a set range, the electronic device may maintain performing out-painting. According to an embodiment, the electronic device may perform out-painting in a range wider than at least the field of view (FoV) 12 of the user 10.

According to an embodiment, the electronic device may perform out-painting until the angle between the straight lines connecting two opposite boundaries of the generated image 641 reaches 240 degrees. For example, the electronic device may perform out painting until the angle between the straight line connecting the left boundary of the generated image 641 and the user 10 and the front gaze direction 11 of the user 10 is 120 degrees, and the angle between the straight line connecting the right boundary of the generated image 641 and the user 10 and the front gaze 11 of the user 10 is 120 degrees.

Returning to FIG. 6A, according to an embodiment, when the painted portion exceeds 240 degrees (Yes in operation 640), in operation 650, the electronic device may generate an image for the remaining area by in-painting. For example, as shown in FIG. 6B, after performing out-painting, an empty portion 651 may be inferred to fill the image. According to an embodiment, the empty portion 651 may be in the range of 120 degrees, and may be disposed behind the user 10 away from the FOV 12 of the user 10.

According to an embodiment, the electronic device may fill the empty portion 651 through in-painting, based on the image 641 generated through out-painting. For example, the electronic device may generate the image of the area corresponding to the empty portion 651 based on images of two opposite ends of the image 641 generated through out-painting.

According to an embodiment, the electronic device may generate a 360-degree image by performing out-painting and in painting.

According to an embodiment, the electronic device may generate a spherical 360-degree image. According to an embodiment, the electronic device may generate a spherical 360-degree image including a ceiling and a floor by performing out-painting and in-painting.

According to an embodiment, the electronic device may generate a hemispherical image. According to an embodiment, the electronic device may generate a 180-degree image including a ceiling and a floor by performing out-painting.

Returning to FIG. 6A, according to an embodiment, in operation 660, the electronic device may render a 360-degree background.

According to an embodiment, the electronic device may display the generated image in at least a portion of the 3D background area of the virtual space. For example, the electronic device may display the generated image in an area including the FOV of the user in the 3D background area.

According to an embodiment, the electronic device may separate the object from the 2D image, may display the expanded image in the 3D background area, and may display the separated object between the user and the 3D background area in the virtual space. An operation of displaying a separated object according to an embodiment is described with reference to FIGS. 10, 11, 12A, 12B, 12C, 12D, 13A, 13B, 13C, 13D, 14 and 15.

FIG. 7A is a flowchart illustrating an operation of generating an expanded image in which two opposite ends are connected to each other, based on a 2D image by an electronic device according to an embodiment of the disclosure.

In the following embodiment, the operations may be sequentially performed, but may be performed non-sequentially. For example, the order of the operations may be changed, and at least two operations may be performed in parallel.

Referring to FIG. 7A, in operation 710, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may separate an original image into independent objects.

According to an embodiment, the electronic device may identify at least one object area included in the original image through image analysis. According to an embodiment, the electronic device may separate the identified at least one object area from the original image. According to an embodiment, the electronic device may divide the original image into a background area and at least one object area.

According to an embodiment, when the original image does not include an object distinct from the background area, the electronic device may omit operation 710.

According to one embodiment, in operation 720, the electronic device may perform in/out-painting by applying generative AI to the original image.

According to an embodiment, the electronic device may perform out-painting for additionally generating an image in at least one direction of the original image based on the original image. For example, the electronic device may perform out-painting for additionally generating an image in a first direction based on one side boundary of the original image. According to an embodiment, the electronic device may additionally generate an image in the left direction based on the left boundary of the original image, and may additionally generate an image in the right direction based on the right boundary.

According to an embodiment, when the object area is separated from the original image, the electronic device may generate an image by in-painting the empty space of the original image generated according to the separation of the object area.

According to an embodiment, in operation 730, the electronic device may bilateral-symmetrically connect the images to each other.

According to an embodiment, the electronic device may bilateral-symmetrically connect the two opposite boundaries of the image generated through out-painting. For example, when an image is additionally generated in the first direction from one side boundary of the original image, the other side boundary of the original image and the boundary of the additionally generated image may be bilateral-symmetrically connected to each other.

According to an embodiment, as illustrated in FIG. 7B, when the image is additionally generated in the left direction based on the left boundary of the original image and the image is additionally generated in the right direction based on the right boundary, the boundary of the image additionally generated in the left direction and the boundary of the image additionally generated in the right direction may be bilateral-symmetrically connected to each other.

FIG. 7B is a view illustrating an operation of generating an expanded image in which two opposite ends are connected to each other, based on a 2D image by an electronic device according to an embodiment of the disclosure.

Referring to FIG. 7B, the electronic device may separate an object 712 from an original image 711. According to an embodiment, the electronic device may generate an out-painted image 721 by additionally generating the image in the left direction based on the left boundary of the original image 711 and additionally generating the image in the right direction based on the right boundary.

According to an embodiment, the electronic device may generate an image 722 (e.g., left-right inverted image A) obtained by left-right inverting the out-painted image 721 (e.g., image A). According to an embodiment, the electronic device may connect the out-painted image 721 and the left-right inverted image 722.

For example, the electronic device may connect one boundary of the out-painted image 721 and one boundary of the left-right inverted image 722. The electronic device may connect the second boundary of the out-painted image 721 and the second boundary of the left-right inverted image 722.

According to an embodiment, a first area 731 in which the second boundary of the out-painted image 721 and the second boundary of the left-right inverted image 722 are connected may be bilateral-symmetrical to each other with respect to a connection boundary 732. According to an embodiment, a second area 741 in which the first boundary of the out-painted image 721 and the first boundary of the left-right inverted image 722 are connected may be bilateral-symmetrical with respect to a connection boundary 742.

According to an embodiment, FIG. 7B illustrates that the out-painted image 721 and the left-right inverted image 722 are linearly connected, but two opposite boundaries of the out-painted image 721 and two opposite boundaries of the left-right inverted image 722 may be connected to each other to be connected in the form of a 360-degree image.

According to an embodiment, the first area 731 and the second area 741 may be bilateral-symmetrical with respect to the connection boundaries 732 and 742, and images of the connection boundaries 732 and 742 may be unnatural. According to an embodiment, the electronic device may process the connection boundaries 732 and 742 to be natural.

Returning to FIG. 7A, according to an embodiment, in operation 740, the electronic device may adjust the looping image at the points meeting at both left and right ends meet, as illustrated in FIG. 8A or 8B.

FIG. 8A is a view illustrating an operation of connecting two opposite ends of an expanded image by an electronic device according to an embodiment of the disclosure.

Referring to FIG. 8A, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may identify a connection area 810 between an out-painted image and a left-right inverted image.

According to an embodiment, the electronic device may identify a portion 811 that is a portion of the connection area 810 of the out-painted image and a second portion 812 that is a portion of the connection area 810 of the left-right inverted image.

According to an embodiment, the electronic device may perform a fade-in/out operation of generating an image by overlapping the positions of the first portion 811 and the second portion 812. According to an embodiment, the electronic device may generate an image including a connection area 813 naturally processed through the fade-in/out operation.

According to an embodiment, the electronic device may input an image in which the out-painted image and the left-right inverted image are connected to the artificial intelligence model trained to naturally process the connection area 810. According to an embodiment, the electronic device may obtain, as output data, an image including the connection area 813 processed to be natural from the artificial intelligence model.

FIG. 8B is a view illustrating an operation of connecting two opposite ends of an expanded image by an electronic device according to an embodiment of the disclosure.

Referring to FIG. 8B, the electronic device may identify a connection area 820 between the out-painted image and the left-right inverted image.

According to an embodiment, the electronic device may identify a plurality of connection portions 821, 822, and 823 of the connection boundary in the connection area 820.

According to an embodiment, the electronic device may generate an image of each portion by recognizing the surroundings of each portion of the plurality of connection portions 821, 822, and 823. For example, the electronic device may generate an image of the first connection portion 821 by recognizing a peripheral portion of the first connection portion 821, may generate an image of the second connection portion 822 by recognizing a peripheral portion of the second connection portion 822, and may generate an image of the third connection portion 823 by recognizing a peripheral portion of the third portion 823.

According to an embodiment, the electronic device may generate an empty space having a predetermined size between the plurality of connection portions 821, 822, and 823, and may generate an image in the empty space by performing in-painting based on peripheral portions of the plurality of connection portions in the out-painted image and peripheral portions of the plurality of connection portions in the left-right inverted image. Accordingly, the electronic device may generate an image including a connection area 824 processed to be natural.

According to an embodiment, the electronic device may input an image in which the out-painted image and the left-right inverted image are connected to the artificial intelligence model trained to naturally process the connection area 820. According to an embodiment, the electronic device may obtain, as output data, an image including the connection area 824 processed to be natural from the artificial intelligence model.

Referring back to FIG. 7A, according to an embodiment, in operation 750, the electronic device may generate an image after dividing into a ceiling and a floor. According to an embodiment, the electronic device may generate an expanded image including a ceiling image and a floor image.

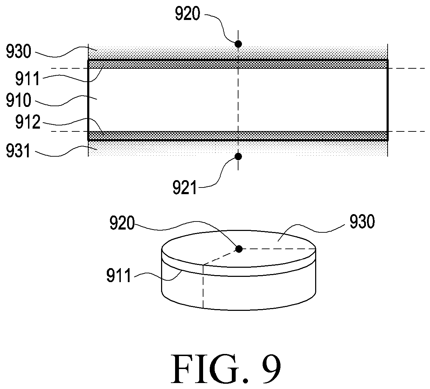

According to an embodiment, as illustrated in FIG. 9, the electronic device may generate the ceiling image and the floor image based on the expanded image.

FIG. 9 is a view illustrating an operation of generating a ceiling and a floor of an expanded image by an electronic device according to an embodiment of the disclosure.

Referring to FIG. 9, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may identify a ceiling area 911 and a floor area 912 in an image 910 obtained by out-painting an original image. According to an embodiment, the image 910 obtained by out-painting may be a 360-degree panoramic image in the form of a side surface of a cylinder.

According to an embodiment, the electronic device may identify the ceiling area 911 and the floor area 912 and may recognize the peripheral area of the ceiling area 911 and the peripheral area of the floor area 912.

According to an embodiment, the electronic device may generate an image 930 up to a ceiling vanishing point 920 based on at least a portion of the ceiling area 911. According to an embodiment, the electronic device may generate the image 930 up to the ceiling vanishing point 920 based on the ceiling area 911 and the peripheral area of the ceiling area 911.

According to an embodiment, the electronic device may generate an image 931 up to a floor vanishing point 921 based on at least a portion of the floor area 912. According to an embodiment, the electronic device may generate the image 931 up to the floor vanishing point 921, based on the floor area 912 and the peripheral area of the floor area 912.

According to an embodiment, the electronic device may generate the image 930 up to the ceiling vanishing point 920 and/or the image 931 up to the floor vanishing point 921 using the generative AI.

Returning to FIG. 7A, according to an embodiment, in operation 760, the electronic device may render the processed image, video, and/or audio.

According to an embodiment, when the expanded image is generated, the electronic device may display the expanded image in the virtual space. For example, the electronic device may display the expanded image in the 3D background area of the virtual space.

According to an embodiment, when an expanded video is generated (e.g., an expanded frame is generated for each frame), the electronic device may display the expanded video in a 3D background area of the virtual space.

According to an embodiment, the electronic device may output audio corresponding to the expanded image or the expanded video. For example, audio may be included in the image or the video, or may be assigned to the image or the video by the electronic device.

FIG. 10 is a flowchart illustrating an operation of disposing each object included in an expanded image, at a different depth, by an electronic device according to an embodiment of the disclosure.

In the following embodiment, the operations may be sequentially performed, but may be performed non-sequentially. For example, the order of the operations may be changed, and at least two operations may be performed in parallel.

Referring to FIG. 10, in operation 1010, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may obtain information related to the user's field of view. For example, the information related to the field of view may include location information and size information about an area displayed on the display in the 3D virtual space. Since the area displayed on the display in the 3D virtual space is changed according to the movement (e.g., movement and/or rotation) of the electronic device, the information related to the field of view may be changed.

According to an embodiment, the field of view information may be obtained through a sensor (e.g., the sensor module 176 of FIGS. 1A and 1B) of the electronic device. For example, the sensor may include a sensor for detecting a movement of the electronic device and/or a movement of the user's head. For example, the sensor may include a motion sensor for detecting a movement of the electronic device and/or a movement of the head of the user wearing the electronic device, and may include a camera for capturing an external environment. According to an embodiment, the electronic device may identify the movement of the electronic device through the movement of a feature point in the image captured through the camera.

According to an embodiment, in operation 1020, the electronic device may obtain a 2D image. According to an embodiment, the electronic device may obtain a 2D image based on a user input. For example, the electronic device may receive a user input for selecting the background image. According to an embodiment, the electronic device may receive the user input for selecting the background image of the external electronic device linked to the user account. According to an embodiment, the electronic device may receive a user input for selecting an image to be used as background among the images displayed through the execution screen of a gallery application (e.g., gallery).

According to an embodiment, the electronic device may collect a background (wallpaper) original image from the database. According to an embodiment, the electronic device may receive the background original image corresponding to the selected background image from the database.

According to an embodiment, the electronic device may receive a 2D image that is an original image (or a background original image) from an external electronic device. For example, the electronic device may receive the 2D image through an external electronic device (e.g., a database) associated with a user account of the electronic device.

According to an embodiment, the electronic device may obtain the original image stored in memory (e.g., the memory 130 of FIGS. 1A and 1B) of the electronic device. For example, the 2D image which is the original image may be captured through a camera (e.g., the camera module 180 of FIGS. 1A and 1B) included in the electronic device, obtained through screen capture, or downloaded to be stored in memory.

According to an embodiment, in operation 1030, the electronic device may identify a first portion of a 2D image to be applied as a background image to the 3D virtual space. For example, applying the background image to the 3D virtual space may be displayed in the background area of the 3D virtual space.

According to an embodiment, in operation 1040, the electronic device may identify a second portion of the 2D image corresponding to the object of interest. According to an embodiment, it is illustrated that operations 1030 and 1040 are sequentially performed, but the order may be changed, and at least some of operations 1030 and 1040 may be performed simultaneously.

According to an embodiment, the electronic device may identify whether there is a depth-applicable object of interest in the 2D image. For example, the electronic device may identify whether there is an object and/or text other than the background in the 2D image.

According to an embodiment, when there is a depth-applicable object of interest in the 2D image, the electronic device may identify the entire 2D image as the first portion to be applied as the background image.

According to an embodiment, when there is a depth-applicable object of interest in the 2D image, the electronic device may separate the 2D image. For example, the electronic device may identify the first portion of the 2D image to be applied as the background image to the 3D virtual space and the second portion of the 2D image corresponding to the object of interest.

According to an embodiment, the electronic device may generate an image by in-painting an empty space in the image or 360-degree background, which is generated by separating the second portion corresponding to the object of interest included in the 2D image.

According to an embodiment, in operation 1050, the electronic device may generate an expanded image corresponding to the first portion of the 2D image.

According to an embodiment, the electronic device may generate an expanded image further including an image portion generated outside the first portion to continue at a boundary of the first portion, based on the attribute of the first portion of the 2D image to be applied as the background image.

According to an embodiment, the electronic device may generate an expanded image in at least one of the methods illustrated in FIGS. 5, 6A, 6B, 7A, 7B, 8A, 8B, and 9.

According to an embodiment, the electronic device may preferentially generate a background requiring a large area.

According to an embodiment, in operation 1060, the electronic device may generate a 3D virtual image by applying a first depth to the expanded image and applying a second depth to the second portion of the 2D image. For example, the electronic device may dispose the object in the virtual space by reflecting the depth value. According to an embodiment, the virtual space may include a VR home screen capable of executing a VR application.

According to an embodiment, the electronic device may dispose the object area at the second depth between the point set in the virtual space in relation to the field of view information and the 3D background area, which is the first depth. For example, the point set in the virtual space may include the position of the user, and the electronic device may dispose the object between the user and the 3D background area.

According to an embodiment, the electronic device may determine the attribute of the object included in the object area as part of disposing. According to an embodiment, the electronic device may dispose the object capable of interaction with the user at a first point set to be interactable with the user at least partially based on the attribute of the object. According to an embodiment, the electronic device may dispose the object that only provides information without interacting with the user at the second point set not to interact with the user, based on at least partially based on the attribute of the object.

According to an embodiment, the electronic device may assign the user interaction to the image according to the characteristics of the virtual space.

According to an embodiment, the electronic device may interact with each of the 360-degree background and the separated objects.

According to an embodiment, the electronic device may add a moving graphic effect to the object at least partially based on the attribute of the object. For example, when the object is a moving natural object (e.g., a person, an animal, a cloud, or a fire) or a moving object (e.g., a ball or a car), the electronic device may add a moving graphic effect to the object.

According to an embodiment, the electronic device may obtain environmental information. For example, the environment information may include at least one of time information, weather information, season information, and a place where the electronic device is positioned.

According to an embodiment, the electronic device may determine the attribute of the graphic effect, at least based on the environment information. For example, when the environmental information includes weather information, the electronic device may differently determine the attribute of the graphic effect according to the weather information. For example, when the weather is currently windy, the electronic device may determine an attribute so that a cloud, which is an object, moves quickly. According to an embodiment, when the weather is currently sunny, the electronic device may determine that the brightness of the background is bright.

According to an embodiment, the electronic device may identify contact information related to an object area (e.g., a person object). According to an embodiment, the electronic device may provide contact information in response to receiving a user input to the object area.

According to an embodiment, the electronic device may receive an event related to contact information. For example, when an event, such as "call reception" is received, the electronic device may add or change a graphic effect related to the event to the object area.

According to an embodiment, when there is no object capable of interacting with the user, the interaction assigning operation may be omitted. According to an embodiment, in operation 1070, the electronic device may display a portion of the 3D virtual image based on the information related to the user's field of view. According to an embodiment, the electronic device may render a processed image (e.g., an expanded image, an object image), video, and/or audio.

According to an embodiment, the electronic device may display a portion of the 3D virtual image obtained by applying the first depth to the expanded image and applying the second depth to the second portion of the 2D image based on the information related to the field of view. For example, the electronic device may display at least a portion of the virtual space including the set 3D background area and the disposed object area. For example, the electronic device may display the background image in the 3D background area of the virtual space within the field of view of the user. According to an embodiment, the electronic device may display the object image in the space between the user and the 3D background area, of the virtual space within the user's field of view.

According to an embodiment, the electronic device may display an image in an area viewed by the user by adjusting the gaze, position, movement, and lens values of the user (or camera).

According to an embodiment, when an expanded video is generated (e.g., an expanded frame is generated for each frame), the electronic device may display the expanded video in the 3D background area of the virtual space and may display the object image in the space between the user and the 3D background area.

According to an embodiment, the electronic device may output audio corresponding to the expanded image or the expanded video. For example, audio may be included in the image or the video, or may be assigned to the image or the video by the electronic device.

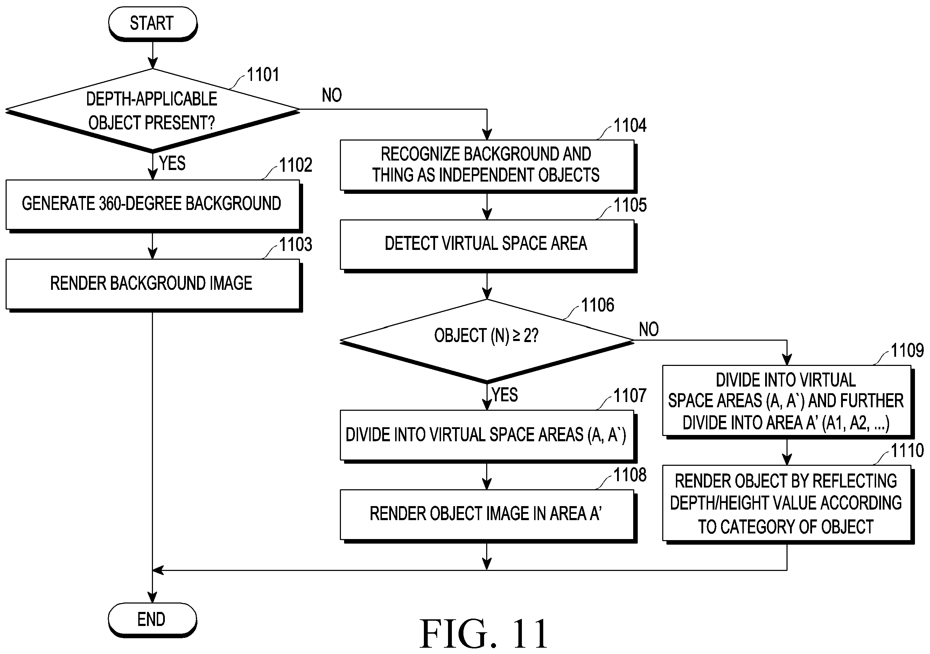

FIG. 11 is a flowchart illustrating an operation of disposing each object included in an expanded image, at a different depth, by an electronic device according to an embodiment of the disclosure.

In the following embodiment, the operations may be sequentially performed, but may be performed non-sequentially. For example, the order of the operations may be changed, and at least two operations may be performed in parallel.

Referring to FIG. 11, in operation 1101, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may identify whether there is a depth-applicable object in an original image.

According to an embodiment, the electronic device may identify whether there is a depth-applicable object in the original image. For example, the electronic device may identify whether there is an object and/or text other than the background in the original image.

According to an embodiment, when the depth-applicable object is not present in the original image (No in operation 1101), in operation 1102, the electronic device may generate a 360-degree background.

According to an embodiment, the electronic device may generate an expanded image further including an image portion generated outside the background area to continue at a boundary of the background area, based on an attribute of the background area. For example, the expanded image may include a 360-degree panoramic image, a 360-degree spherical image, or a hemi-spherical image.

According to an embodiment, the electronic device may generate an expanded image in at least one of the methods illustrated in FIGS. 5, 6A, 6B, 7A, 7B, 8A, 8B, and 9.

According to an embodiment, in operation 1103, the electronic device may render a background image. According to an embodiment, the electronic device may render the 360-degree background generated regardless of the area of the virtual space to the background area of the virtual space.

According to an embodiment, when there is a depth-applicable object in the original image (Yes in operation 1101), in operation 1104, the electronic device may recognize the background and the object as independent objects. According to an embodiment, the electronic device may separate the background area and the object area of the original image.

According to an embodiment, the electronic device may generate an image by performing in-painting on the image or the empty space in the 360-degree background, generated according to object image separation.

According to an embodiment, in operation 1105, the electronic device may detect a virtual space area. For example, the electronic device may detect a virtual space area between a set point (e.g., the user's position) in the virtual space and the background area.

According to an embodiment, in operation 1106, the electronic device may identify whether there are two or more objects.

According to an embodiment, when there are less than two objects (No in operation 1106), in operation 1107, the electronic device may divide the virtual space area. For example, when there is one object, the electronic device may divide the virtual space area into area A and area A'.

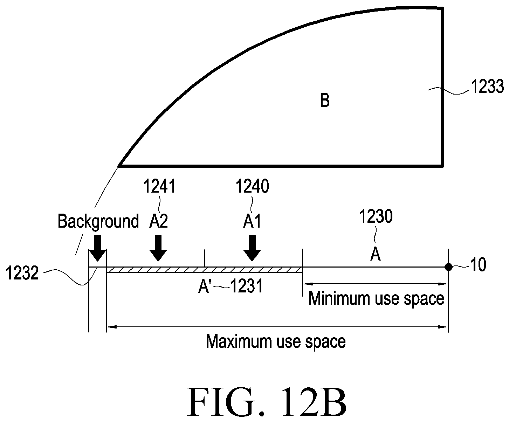

According to an embodiment, area A in the virtual space may be an area in which an object may not be disposed. According to an embodiment, area A' in the virtual space may be an area in which an object may be disposed. According to an embodiment, area A in the virtual space is a space related to the minimum movement of the user, and may be a space within a set distance from the user. According to an embodiment, area A' in the virtual space may be a remaining area other than area A in the virtual space, and may be a space from the set distance from the user to the background area. According to an embodiment, the operation of dividing the virtual space is described with reference to FIG. 12B.

According to an embodiment, in operation 1108, the electronic device may render the object image in area A'. According to an embodiment, the electronic device may dispose one object in area A' which is a set distance or more away from the user and closer than the background area.

According to an embodiment, when there are two or more objects (Yes in operation 1106), in operation 1109, the electronic device may divide the virtual space area into area A and area A', and may further divide area A'. For example, the electronic device may divide area A' into area A1 and area A2.

According to an embodiment, area A1 may be an area in which an object capable of interacting with the user is disposed in area A'. According to an embodiment, area A2 may be an area in which an object incapable of interacting with the user is disposed in area A'. According to an embodiment, area A1 and area A2 may be divided based on the distance to the user. For example, area A1 may be an area close to the user in area A', and area A2 may be an area far from the user in area A'. According to an embodiment, the operation of dividing the virtual space is described with reference to FIG. 12B.

According to an embodiment, in operation 1110, the electronic device may render the object by reflecting depth and/or height values according to the category of the object. According to an embodiment, the electronic device may determine the depth according to the object position in the content, as well as the category of the object and dispose the object in the virtual space based on the determined depth. According to an embodiment, when there are a plurality of objects, the electronic device may dispose the plurality of objects based on the order of depths that may be identified in the original image.

According to an embodiment, the electronic device may render the object in area A1 or area A2 based on the attribute of the object. According to an embodiment, based on the attribute of the object, when the object is a floating object (e.g., a ball), the electronic device may render the object in an area close to the ceiling area of area A1. According to an embodiment, when the object is a floating object, the electronic device may render the object in the ceiling area, based on the attribute of the object.

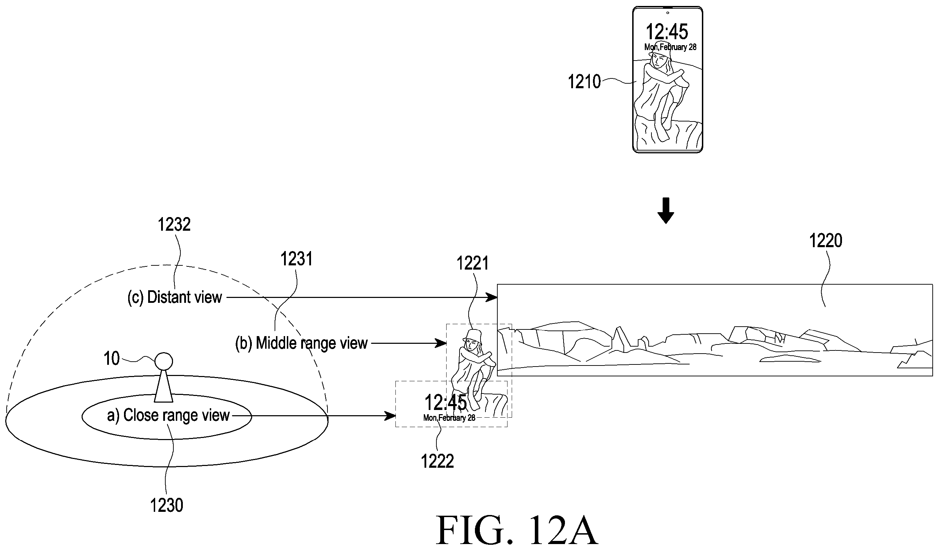

FIG. 12A is a view illustrating an operation of disposing each object included in an expanded image, at a different depth, by an electronic device according to an embodiment of the disclosure.

Referring to FIG. 12A, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may generate an expanded image 1220 based on a 2D image 1210. According to an embodiment, the 2D image 1210 may be an image displayed on the background screen.

According to an embodiment, the electronic device may generate the expanded image 1220 based on the 2D image 1210 using the generative AI. According to an embodiment, the electronic device may separate at least one object 1221 or 1222 included in the 2D image 1210.

According to an embodiment, the electronic device may separate the 2D image 1210 into a background image and one or more objects 1221 and 1222, and then may perform out-painting and in-painting on the background image to generate the expanded image 1220.

According to an embodiment, the electronic device may generate the expanded image 1220 by performing out-painting and in-painting on the 2D image 1210, and then may separate the at least one object 1221 or 1222 included in the expanded image 1220. According to an embodiment, the electronic device may generate an image by performing in-painting on the empty space generated by separating the at least one object 1221 or 1222.

According to an embodiment, the electronic device may divide the virtual space into a plurality of areas. For example, the electronic device may be divided into a plurality of areas based on the distance to the user 10 disposed in the center of the virtual space.

For example, an area within a first distance from the user 10 may be a first area 1230 (e.g., a closed range view). According to an embodiment, the electronic device may have a second area 1231 (e.g., a middle range view) that is larger than or equal to the first distance and less than a second distance from the user 10. According to an embodiment, the second distance may be a boundary of the virtual space. According to an embodiment, the area corresponding to the boundary of the virtual space may be a third area 1232 (e.g., a distant view (sky box)). According to an embodiment, the range of at least one of the first area 1230, the second area 1231, and the third area 1232 may be adjustable by the user input. According to an embodiment, the third area 1232 may have a curved surface shape corresponding to the shape of the virtual space. For example, the third area may be spherical or hemi-spherical.

According to an embodiment, the first area 1230 is a main use space of the user 10, and the electronic device may display an object (e.g., a home screen or an execution screen) related to the VR application. According to an embodiment, the electronic device may dispose, in the first area 1230, a floating object and an object 1222 capable of interacting with the user, based on the attribute of the object, among the at least one object 1221 or 1222 obtained from the original image 1210.

According to an embodiment, the electronic device may display, in the second area 1231, an object 1221 included in a category, such as a person, an animal, or a plant, based on an attribute of the object among the at least one object 1221 or 1222.

According to an embodiment, the electronic device may display the expanded image 1220 in at least a portion of the third area 1232. According to an embodiment, when the expanded image 1220 is a 360-degree panoramic image, the electronic device may display the expanded image 1220 in an area other than the ceiling area and the floor area of the third area 1232. According to an embodiment, when the expanded image 1220 is a spherical image, the electronic device may display the expanded image 1220 in the entire area of the third area 1232.

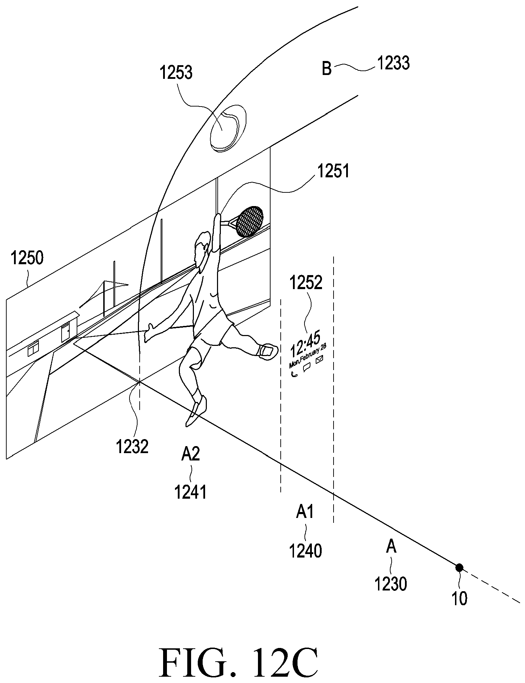

According to an embodiment, as illustrated in FIG. 12B or 12C, the electronic device may divide the second area 1231 into a plurality of areas to dispose an object.

FIG. 12B is a view illustrating a depth of a 3D space according to an embodiment of the disclosure.

Referring to FIG. 12B, the virtual space may include a first area 1230 (e.g., area A), a second area 1231 (e.g., area A'), and a third area 1232 (e.g., a background area) based on the distance from the user 10.

According to an embodiment, the electronic device may further divide the second area 1231 into a 2-1^{th} area 1240 (e.g., area A1) and a 2-2^{th} area 1241 (e.g., area A2), based on the distance from the user 10. In FIG. 12B, the second area 1231 is divided into two areas, but may be divided into three or more areas.

According to an embodiment, the electronic device may further divide an area larger than or equal to a height set based on the height as a ceiling area 1233 (e.g., area B) based on the position of the user 10. According to an embodiment, the ceiling area 1233 may be a space in which the user 10 has to raise his head.

According to an embodiment, the electronic device may dispose it in the first area 1230, the 2-1^{th} area 1240, the 2-2^{th} area 1241, or the ceiling area 1233, based on the attribute of at least one object separated from the original image.

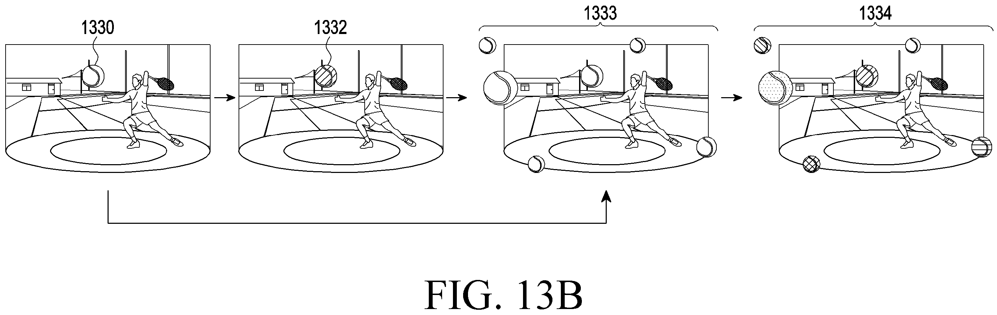

According to an embodiment, the electronic device may additionally generate and dispose a virtual object, based on the attribute of the at least one object. According to an embodiment, an operation of additionally generating and disposing a virtual object is described below with reference to FIG. 13B.

According to an embodiment, a floatable object (e.g., a petal, a ball, or an airplane) may be disposed in the first area 1230, the 2-1^{th} area 1240, the 2-2^{th} area 1241, or the ceiling area 1233 by applying the height value, based on the object attribute.

FIG. 12C is a view illustrating objects of an expanded image disposed at different depths according to an embodiment of the disclosure.

Referring to FIG. 12C, the electronic device may include a first area 1230 (e.g., area A), a 2-1^{th} area 1240 (e.g., area A1), a 2-2^{th} area 1241 (e.g., area A2), a third area 1232 (e.g., a background area), and a ceiling area 1233 (e.g., area B), based on the distance of the virtual space from the user 10.

According to an embodiment, the electronic device may dispose an expanded image 1250 generated from the original image and at least one object 1251, 1252, or 1253 separated from the original image in a corresponding area of the virtual space.

For example, the electronic device may display the expanded image 1250 in the third area 1232 corresponding to the boundary of the virtual space. According to an embodiment, the electronic device may display the first object 1251, which is a person object, in the 2-2^{th} area 1241, based on the attribute of the object. According to an embodiment, the electronic device may display the second object 1252, which is an object capable of interacting with the user, in the 2-1^{th} area 1240, based on the attribute of the object. According to an embodiment, the electronic device may display the third object 1253, which is a floatable object in the ceiling area 1233 based on the attribute of the object.

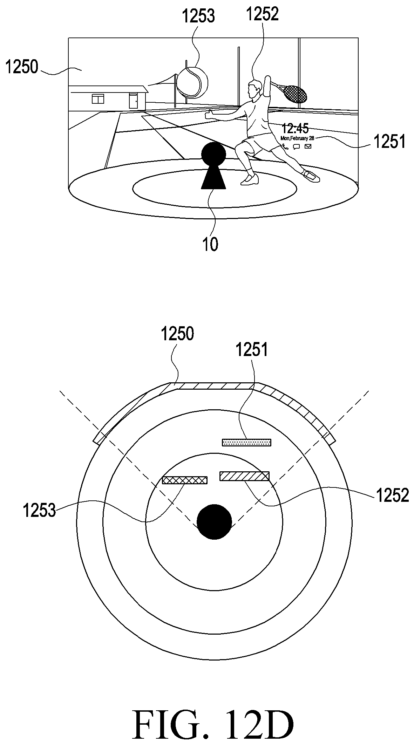

FIG. 12D is a view illustrating objects of an expanded image disposed at different depths according to an embodiment of the disclosure.

Referring to FIG. 12D, the electronic device may overlap and provide the expanded image 1250, the first object 1251, the second object 1252, and the third object 1253. According to an embodiment, the expanded image 1250, the first object 1251, the second object 1252, and the third object 1253 may be disposed with each other when viewed from above. Accordingly, the electronic device may provide a 3D effect by displaying the expanded image 1250, the first object 1251, the second object 1252, and the third object 1253 when viewed by the user from the front.

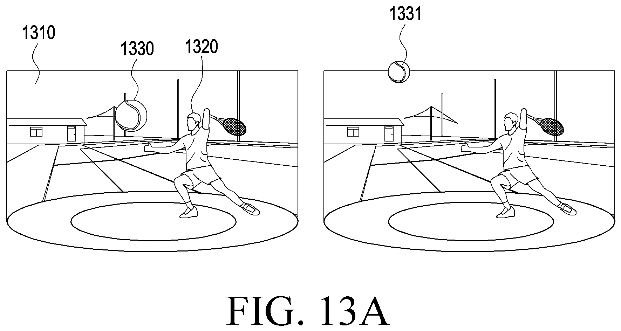

FIG. 13A is a view illustrating an operation of giving an interaction to a disposed object by an electronic device according to an embodiment of the disclosure.

Referring to FIG. 13A, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may display an expanded image 1310, a first object 1320, and a second object 1330. According to an embodiment, the electronic device may interact with the user by putting a motion into at least one of the expanded image 1310, the first object 1320, and the second object 1330, based on the attribute.

For example, the electronic device may assign a flying motion to the second object 1330 including a floatable attribute. According to an embodiment, the electronic device may display a second object 1331 disposed at a different position by applying a motion for changing the position of the second object 1330. According to an embodiment, the second object 1331 disposed at the different position may have a different height as well as the left and right position. According to an embodiment, the size of the second object 1331 disposed at the different position may vary based on the distance to the user.

FIG. 13B is a view illustrating an operation of giving an interaction to a disposed object by an electronic device according to an embodiment of the disclosure.

Referring to FIG. 13B, the electronic device may display a second object 1330 which is movable based on the attribute. According to an embodiment, when the user receives a first user input (e.g., touch) for selecting the second object 1330, the electronic device may display a second object 1332 of which color is changed. According to an embodiment, the color may be randomly changed. According to an embodiment, it is an example that the color of the object is changed based on the user input, and without limitations thereto, a highlight effect of a different color, type, and/or size may be applied to the object based on the user input.

According to an embodiment, when receiving a second user input (e.g., a long touch) for selecting the second object 1330, the electronic device may display a plurality of additionally generated objects 1333 based on the second object 1330. According to an embodiment, the electronic device may assign a motion to each of the plurality of additionally generated objects 1333.

According to an embodiment, a plurality of objects 1333 shaped as balls are displayed in FIG. 13B, but according to an embodiment, when an object that is a petal is selected, a plurality of petals may be displayed as if they are scattered.

According to an embodiment, when a user input (e.g., a touch) for selecting one of the plurality of additionally generated objects 1333 is received, the electronic device may display a plurality of recolored objects 1334. According to an embodiment, it is an example that the color of the object is changed based on the user input, and without limitations thereto, a highlight effect of a different color, type, and/or size may be applied to the object based on the user input.

As such, the electronic device may add or change an object through interaction with the user.

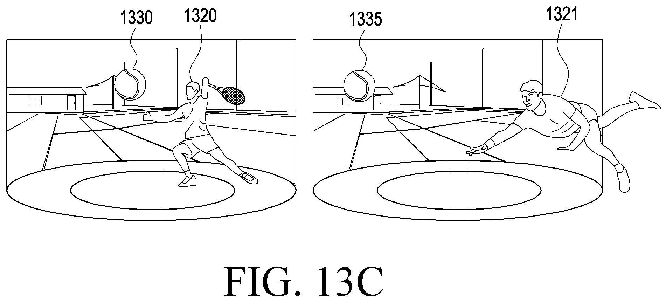

FIG. 13C is a view illustrating an operation of giving an interaction to a disposed object by an electronic device according to an embodiment of the disclosure.

Referring to FIG. 13C, the electronic device may perform an interaction with the user by putting a motion into at least one of the first object 1320 and the second object 1330, based on the attribute.

For example, the electronic device may assign a flying motion to the second object 1330 including a floatable attribute. According to an embodiment, the electronic device may assign a motion for changing the posture of the first object 1320 including the attribute of moving while changing the posture.

According to an embodiment, the time of motion may be determined based on the category of the object. For example, since the first object 1320, which is a person, does not have a long time to move in the air, the electronic device may assign a movement within about 5 seconds. According to an embodiment, the electronic device may assign the movement of the first object 1320 as a graphics interchange format (GIF).

According to an embodiment, when assigning a movement of gently wagging the tail to an object which is an animal, the electronic device may not pose a limit to the movement time.

According to an embodiment, the electronic device may assign a motion for changing the position and posture of the first object 1320 to display a first object 1321 disposed at the different position. According to an embodiment, the electronic device may assign a motion for changing the position of the second object 1330 to display a second object 1335 disposed at the different position. According to an embodiment, the second object 1335 disposed at the different position may have a different height as well as the left and right position. According to an embodiment, the size of the second object 1335 disposed at the different position may vary based on the distance to the user.

As described above, it is possible to provide a sense of liveliness by assigning motion to an object, and allow it to be used as a screen saver.

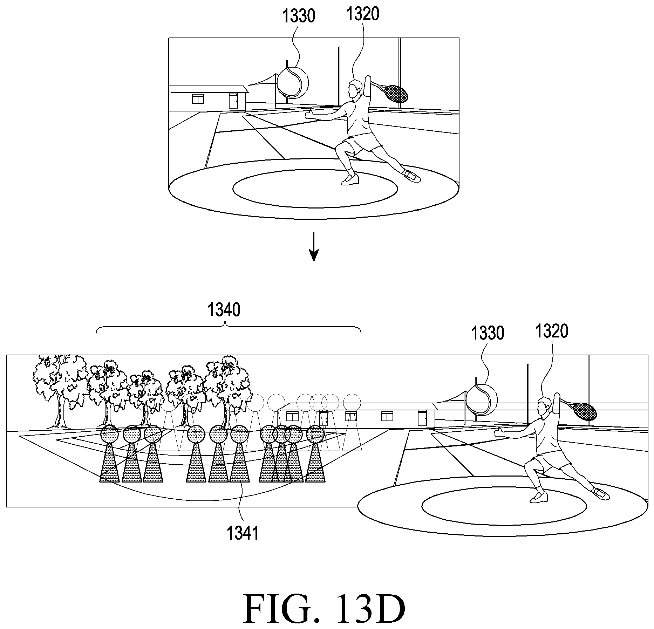

FIG. 13D is a view illustrating an operation of giving an interaction to a disposed object by an electronic device according to an embodiment of the disclosure.

Referring to FIG. 13D, the electronic device may assign a motion to a background. For example, the electronic device may maintain the first object 1320 and the second object 1330 and may assign a movement to a background 1340. For example, the electronic device may assign motion to images included in the background 1340, but may set a small range of motion and repeatedly reproduce the images.

According to an embodiment, the electronic device may additionally dispose an image included in the background 1340. For example, the electronic device may additionally generate and dispose a spectator object 1341 included in the background 1340. According to an embodiment, the electronic device may also assign motion to additionally disposed objects.

According to an embodiment, the electronic device may add images not included in the background 1340 based on the content (e.g., category) of the original image. For example, when the original image is a game scene, the electronic device may add a spectator image, another player image, an electronic display image, and/or a placard image that are not included in the background 1340.

According to an embodiment, images additionally disposed in the background 1340 may also be able to interact with the user. For example, when a user input (e.g., a pinch) for selecting an additionally disposed electronic display is received, the electronic device may add a motion so that a player name passes through the electronic display image.

According to an embodiment, the electronic device may control the brightness of the entire virtual space based on the content (e.g., category) of the original image or the background 1340. As described above, it is possible to provide a sense of immersion by controlling the brightness of the virtual space based on the content of the original image or background.

It may also be used for viewing by assigning movement to the background. For example, when the background is a natural object, such as fire, mountain, or water, it may be provided for viewing by providing movement to the background, and allow it to function as a screen saver.

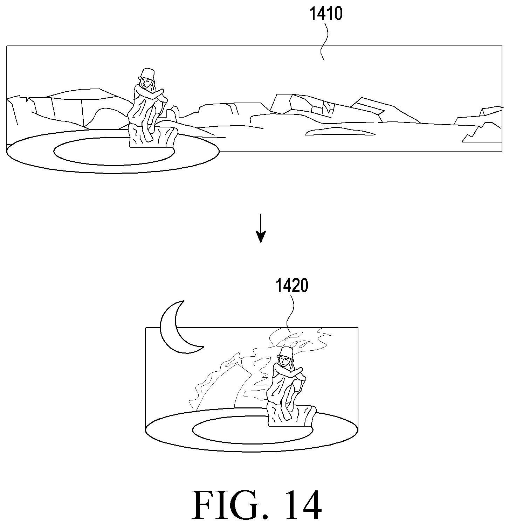

FIG. 14 is a view illustrating an operation of giving an interaction to a disposed object by an electronic device according to an embodiment of the disclosure.

Referring to FIG. 14, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may assign a movement to a background image 1410 based on environment information. For example, based on the time information, a background image 1410 corresponding to the daytime may be provided during the daytime, and a background image 1420 corresponding to the night may be provided during the nighttime. For example, the electronic device may gradually change the background image over time.

According to an embodiment, the background image 1410 corresponding to the daytime may be changed to the background image 1420 corresponding to the night by a user input. For example, when a drag-and-drop input of the user selecting and pulling down the ceiling area of the virtual space is received, the electronic device may change the background image 1410 corresponding to the daytime to the background image 1420 corresponding to the night.

According to an embodiment, when changed to the background image 1420 corresponding to the night, the electronic device may additionally dispose an object that is not included in the background image 1410 corresponding to the daytime but is suitable for the background image 1420 corresponding to the night. For example, the electronic device may additionally dispose objects, such as a moon, a star, a comet, and an aurora in the background image 1420 corresponding to the night.

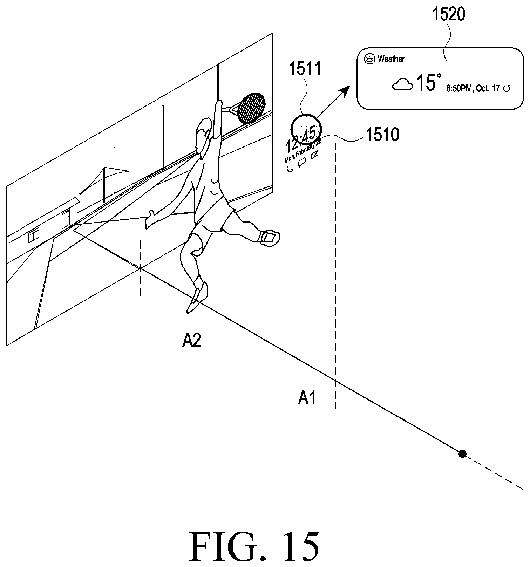

FIG. 15 is a view illustrating an operation of giving an interaction to a disposed object by an electronic device according to an embodiment of the disclosure.

Referring to FIG. 15, when a user input 1511 (e.g., a touch) for selecting a first object 1510 is received, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may display information related to a first object 1510.

For example, when a user input 1511 for selecting the first object 1510 providing the current time information is received, the electronic device may display a screen 1520 including at least one of related widgets, weather information, schedule information, and reminder information in the virtual space. According to an embodiment, the screen 1520 may be a pop-up screen.

According to an embodiment, when a user input for selecting an object related to a person, a plant or animal, a building, or a thing is received, the electronic device may provide information related to the selected object. For example, when the user input for selecting an object related to a person is received, the electronic device may provide contact information corresponding to the person. According to an embodiment, the contact information may include a user interface for making a call or sending a message at the contact corresponding to the person.

According to an embodiment, when a user input for selecting a background image is received, the electronic device may provide information related to the background image. For example, when a user input for selecting a background image is received, the electronic device may provide information (e.g., place name or location) related to a place included in the background image.

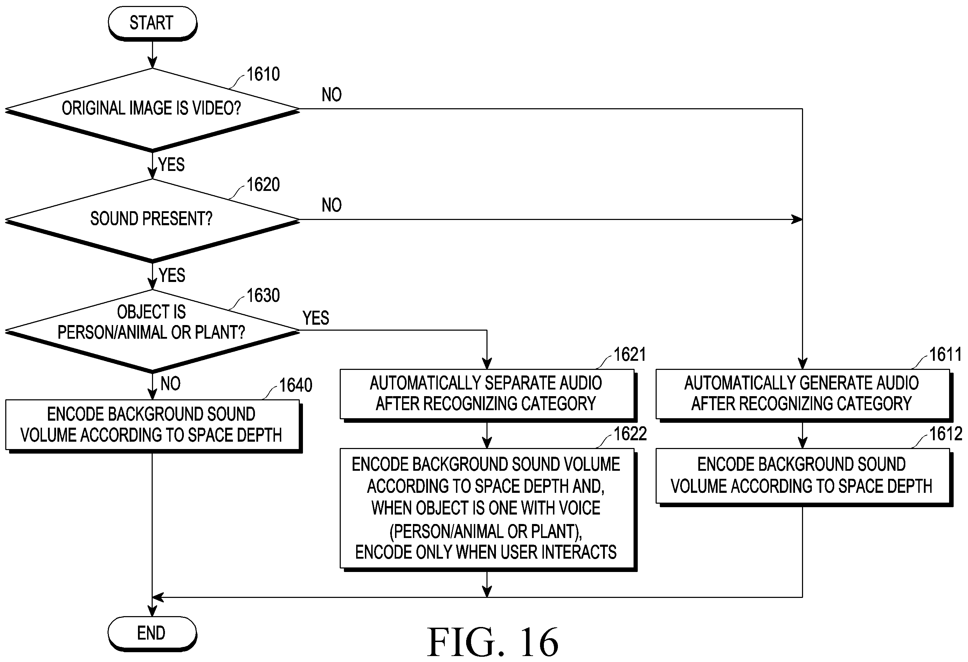

FIG. 16 is a flowchart illustrating an operation of mapping an audio with a disposed object by an electronic device according to an embodiment of the disclosure.

In the following embodiment, the operations may be sequentially performed, but may be performed non-sequentially. For example, the order of the operations may be changed, and at least two operations may be performed in parallel.

Referring to FIG. 16, in operation 1610, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may identify whether an original is a video. According to an embodiment, the electronic device may identify whether the original image is an image or a video.

According to an embodiment, when the original is not a video (No in operation 1610), in operation 1611, the electronic device may automatically generate audio after recognizing the category of the object. According to an embodiment, when the original image is an image, since the original image does not include audio, the electronic device may identify the category of the image and then generate audio corresponding to the category. For example, according to whether the image is a natural environment, an urban environment, or a specific situation (e.g., an athletic event or a festival), audio corresponding to the image may be generated.

According to an embodiment, the electronic device may generate a background image of the image and audio corresponding to at least one object included in the image.

According to an embodiment, in operation 1612, the electronic device may encode the background sound volume according to the depth of the space. For example, the electronic device may encode the sound volume based on the area to be disposed according to the attribute of the object. For example, as the object is disposed close to the user, the sound volume may be encoded to increase. For example, since the background image is disposed to be farthest from the user, the size of the audio related to the background image may be encoded to be smaller than the size of other objects.

According to an embodiment, if the original image is a video (Yes in operation 1610), in operation 1620, the electronic device may identify whether a sound is present in the original image.

According to an embodiment, when there is a sound in the original image (Yes in operation 1620), in operation 1630, the electronic device may identify whether the object is a person or an animal or plant. According to an embodiment, the electronic device may identify whether the category of the object is capable of making sounds, such as a person or an animal or plant through object recognition.

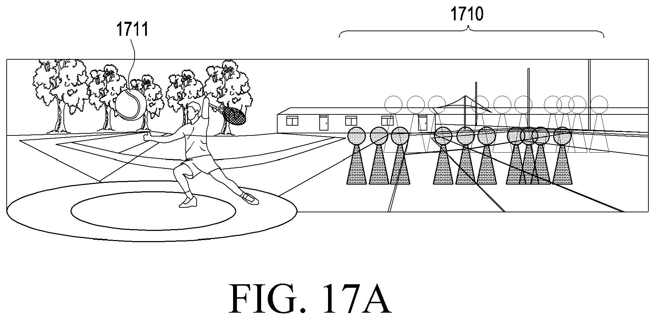

According to an embodiment, when the object is not a person or animal or plant (No in operation 1630), in operation 1640, the electronic device may encode the background sound volume according to the depth of the space. For example, as illustrated in FIG. 17A, the electronic device may encode the sound volume based on the area to be disposed according to the attribute of the object. For example, as the object is disposed close to the user, the sound volume may be encoded to increase. For example, since the background image is disposed to be farthest from the user, the size of the audio related to the background image may be encoded to be smaller than the size of other objects.

FIG. 17A is a view illustrating an operation of mapping an audio with a disposed object by an electronic device according to an embodiment of the disclosure.

Referring to FIG. 17A, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may map different sounds to different intensities according to the distance (e.g., near view, middle view, or far view) between the object and the user. For example, the sound of the object 1711 (e.g., a ball) corresponding to the close distance from the user may be mapped to a sound larger than the sound of the object 1710 (e.g., a spectator) corresponding to the long distance from the user.

According to an embodiment, when the background image is nature, a sound corresponding to nature may be applied. For example, based on the background image, a desert wind sound, a snow falling sound, a forest sound, a firewood burning sound, or a dull sound may be applied. According to an embodiment, the electronic device may apply a sound corresponding to the background image as a small sound.

According to an embodiment, when the video is displayed, the sound corresponding to the nearby object and the sound corresponding to the background image may be applied at different decibels or frequencies, respectively. For example, the voice corresponding to the person object close to the user may be applied to be large, and the wind sound of the desert corresponding to the background image may be applied to be small.

According to an embodiment, when the background image is a road or a stadium that is not natural, noise may be identified and removed or the sound volume may be lowered and applied based on much noise being included in the sound.

According to an embodiment, the electronic device may differently apply the sound corresponding to the background image and the sound corresponding to the object according to whether it is day or night. For example, at night, the sound corresponding to the background image and the sound corresponding to the object may be applied to echo off more than during the day.

Returning to FIG. 16, according to an embodiment, when the object is a person or an animal or plant (Yes in operation 1630), in operation 1621, the electronic device may automatically separate audio after recognizing the category of the object.

According to an embodiment, when the object is a person or an animal, the electronic device may separate the sound corresponding to the object from the sound included in the original image. According to an embodiment, when the sound is too small to extract the sound of the object, the artificial intelligence resource may be used to map the sound corresponding to the object.

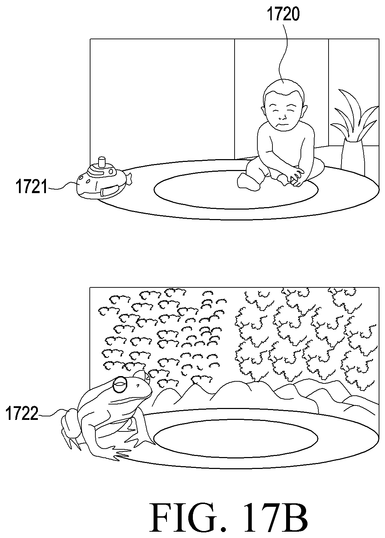

Returning to FIG. 16, according to an embodiment, in operation 1622, the electronic device may encode the background sound volume according to the depth of the space, and as illustrated in FIG. 17B, the electronic device may encode an object having a sound, such as a person or an animal or plant, only when the user interacts with the object.

FIG. 17B is a view illustrating an operation of mapping an audio with a disposed object by an electronic device according to an embodiment of the disclosure.

Referring to FIG. 17B, when the object is a person 1720, a sounding object 1721, or an animal 1722, the electronic device may separate a sound corresponding to the object. According to an embodiment, when the objects are the person 1720 and the object 1721, the electronic device may provide a mutual interaction between the objects (e.g., an image representing that the person 1720 plays with the object 1721).

According to an embodiment, when the electronic device is a sounding object (e.g., a crying baby or a barking dog), the electronic device may output a sound corresponding to the object only when there is an interaction between the object and the user. For example, in a state in which the electronic device does not output the sound corresponding to the object, when the user looks at the object or a user input for selecting the object is received, the electronic device may output the sound corresponding to the object.

As described above, in the case of a sound that may undermine the immersion level of the virtual space, it may be output only when there is an interaction of the user.

According to an embodiment, the electronic device may encode the sound considering sound in the real space. For example, when there are several sounds, because the sounds may be provided overlappingly, only sounds corresponding to a set number (e.g., two) of objects may be generated with the sound corresponding to the background image prioritized.

According to an embodiment, the sound may be a result obtained by providing an image as an input and outputting the image, and the electronic device may interpret the input image, generate the interpreted information as a prompt, and reproduce the sound generated based on the prompt.

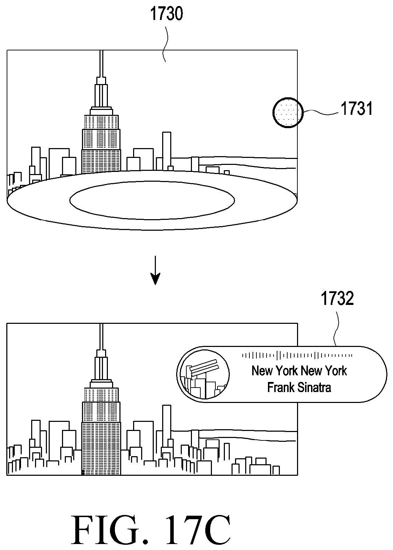

According to an embodiment, when there is no sound in the original image (No in operation 1620), the electronic device may proceed to operation 1611 to automatically generate audio after recognizing the category of the object. According to an embodiment, in operation 1612, as illustrated in FIG. 17C, the electronic device may encode the background sound volume according to the depth of the space.

FIG. 17C is a view illustrating an operation of mapping an audio with a disposed object by an electronic device according to an embodiment of the disclosure.

Referring to FIG. 17C, the electronic device may map a sound related to a background image 1730 or may provide a related music playback interface.

According to an embodiment, the electronic device may analyze a place, a region, and a city related to the background image 1730, and may provide a related sound based on the analysis result. For example, the electronic device may search for a song related to the region of the background image 1730 and provide the searched song.

According to an embodiment, when the user input 1731 for selecting the background image 1730 is received while the sound related to the background image 1730 is being output, the electronic device may display an interface 1732 for the sound related to the background image 1730. According to an embodiment, the interface 1732 may include information related to sound and/or a button for controlling sound.

According to an embodiment, the electronic device may repeatedly reproduce a sound source of a set time (e.g., 2-3 minutes).

According to an embodiment, the electronic device may change music output based on a user input.

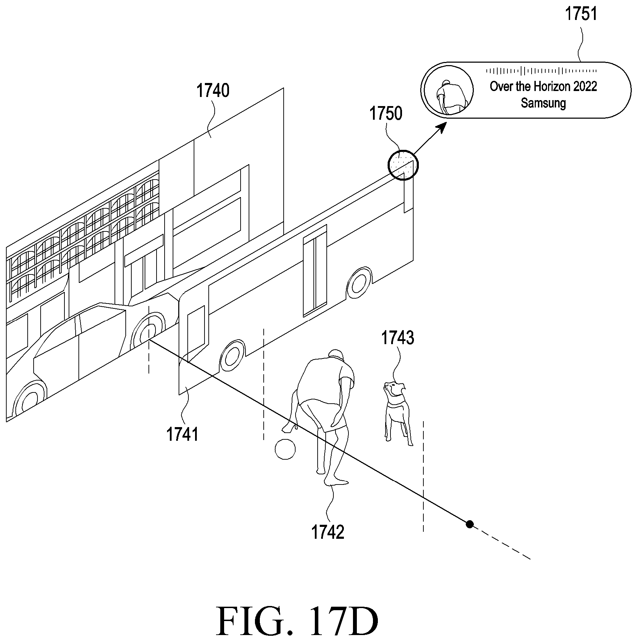

FIG. 17D is a view illustrating an operation of mapping an audio with a disposed object by an electronic device according to an embodiment of the disclosure.

Referring to FIG. 17D, the electronic device may map audio to each of a background image 1740 and the at least one object 1741, 1742, and 1743. According to an embodiment, each of the background image 1740 and the at least one object 1741, 1742, and 1743 may be generated or extracted based on the original image.

According to an embodiment, the electronic device may output related audio based on the original image or the generated background image 1740 and at least one object 1741, 1742, and 1743. For example, when the original image or the generated background image 1740 and the at least one object 1741, 1742, or 1743 are in an urban environment, the electronic device may automatically output urban noise.

According to an embodiment, the electronic device may map audio to an object (e.g., a building, a plant, or an object) that does not make a sound, based on the attribute of the object. According to an embodiment, the electronic device may map audio to the object based on a user input. According to an embodiment, the electronic device may output audio mapped to the object, may output the mapped audio when the user interaction (e.g., touching the object) is performed, or may display a player related to the audio. For example, when a user input 1750 for selecting the first object 1741 is received, the electronic device may display a media player screen 1751 related to the audio mapped to the first object 1741. For example, the media player screen 1751 may include audio-related information (e.g., song title or singer) and/or a button for playback control.

According to an embodiment, when the user interaction is performed on an object (e.g., a person or an animal) that makes a sound, audio corresponding to the object may be output. For example, when a user input for selecting the second object 1742 which is a person is received, the electronic device may output a moving sound and a ball bouncing sound which are audio corresponding to the second object 1742. According to an embodiment, when a user input for selecting the third object 1743 that is an animal is received, the electronic device may output a barking sound that is audio corresponding to the third object 1743.

According to an embodiment, the electronic device may further provide movement of the object as well as audio output when selecting the object. For example, when a user input for selecting the second object 1742, which is a person, is received, the electronic device may output a movement of bouncing a ball on the second object 1742. According to an embodiment, when a user input for selecting the third object 1743 that is an animal is received, the electronic device may output a tail wagging motion to the third object 1743.

As such, the electronic device may provide a sense of immersion by outputting audio related to the background image 1740 and the at least one object 1741, 1742, and 1743. More particularly, for the at least one object 1741, 1742, and 1743, it is possible to prevent the immersion level of the virtual space from being deteriorated by outputting audio and/or movement based on the user's interaction.

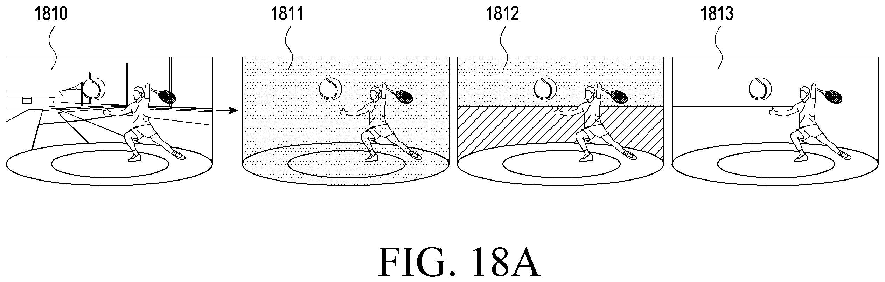

FIG. 18A is a view illustrating an operation of changing a disposed object by an electronic device according to an embodiment of the disclosure. FIG. 18A illustrates an embodiment of partially removing and changing a far view among a near view (e.g., the first area 1230 of FIGS. 12A, 12B, 12C and 12D), a middle view (e.g., the second area 1231 of FIGS. 12A, 12B, 12C and 12D), and the far view (e.g., the third area 1232 of FIGS. 12A, 12B, 12C and 12D).

Referring to FIG. 18A, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may change a background image 1810. According to an embodiment, the electronic device may change the background image 1810 based on a user input or the passage of time. According to an embodiment, the electronic device may change the background image 1810 based on a change in the object.

According to an embodiment, the electronic device may change to a monochromatic or gradient background image 1811 based on the color extracted from the background image 1810. For example, the color extracted from the background image 1810 may be the color in the largest area in the background image 1810.

According to an embodiment, the electronic device may change to an illustration type image 1812 based on the background image 1810. According to an embodiment, the electronic device may input the background image 1810 to the artificial intelligence model trained to change the image to the illustration type image, and display the illustration type image 1812 obtained as output data from the artificial intelligence model. According to an embodiment, the electronic device may change the background image 1810 to the illustration type image 1812 using an algorithm for changing the image to the illustration type image.

According to an embodiment, the electronic device may change to a line type image 1813 based on the background image 1810. According to an embodiment, the electronic device may input the background image 1810 to the artificial intelligence model trained to change the image to the line type image, and display the line type image 1813 obtained as output data from the artificial intelligence model. According to an embodiment, the electronic device may change the background image 1810 to the line type image 1813 using an algorithm for changing the image to the line type image.

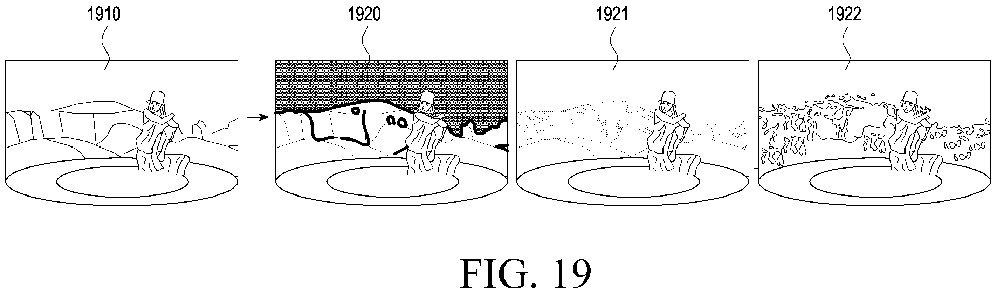

According to an embodiment, FIG. 18A illustrates that the background image is changed to one of three types, but the disclosure is not limited thereto, and the background image may be changed to another type of image as illustrated in FIG. 19 through an artificial intelligence model or algorithm.

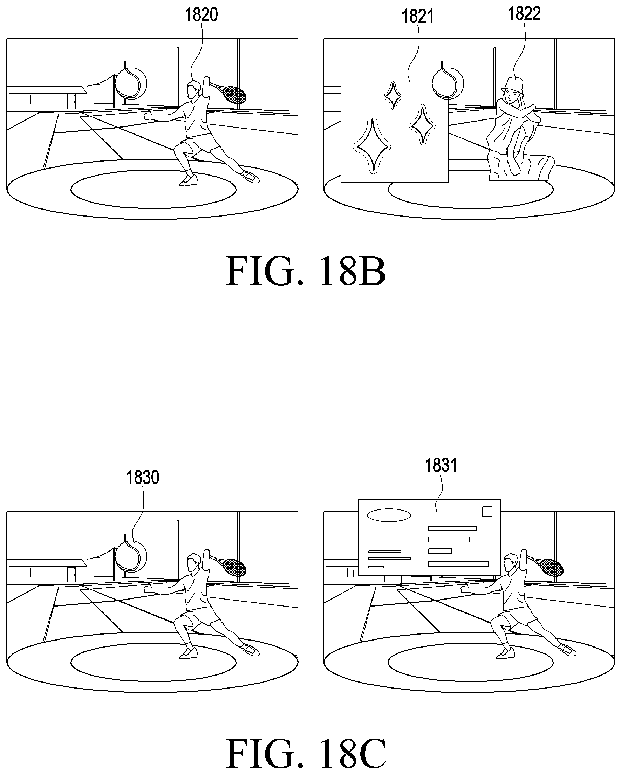

FIG. 18B is a view illustrating an operation of changing a disposed object by an electronic device according to an embodiment of the disclosure. For example, FIG. 18B illustrates an embodiment of partially removing and changing a middle view among a near view, the middle view, and a far view.

Referring to FIG. 18B, the electronic device may change an object 1820 disposed in the middle view among the object disposed in the near view, the object 1820 disposed in the middle view, and the background image disposed in the far view to objects 1821 and 1822 of another category. For example, the electronic device may change an exercising person object 1820 into a glittering illustration object 1821 and a sitting person-shaped object 1822. According to an embodiment, the electronic device may provide a virtual space of an exotic atmosphere (e.g., a kitsch atmosphere) by disposing an object of a different category in the middle view.

FIG. 18C is a view illustrating an operation of changing a disposed object by an electronic device according to an embodiment of the disclosure. For example, FIG. 18C illustrates an embodiment of partially removing and changing a middle view among a near view, the middle view, and a far view.

Referring to FIG. 18C, the electronic device may change an object 1830 disposed in the near view from among the object disposed in the near view, the object disposed in the middle view, and the background image disposed in the far view to an object of another category. For example, the electronic device may change a flying ball-shaped object 1830 to an object 1831 (e.g., a business card, an electronic display, or a pop-up screen) related to providing information.

According to an embodiment, the electronic device may provide a virtual space of an exotic atmosphere (e.g., a kitsch atmosphere) by disposing an object of a different category in the near view.

In FIGS. 18A to 18C, it is disclosed to change the displayed object to another object. However, according to an embodiment, the electronic device may dispose images of a category similar to the object in several layouts.

FIG. 19 is a view illustrating an operation of changing a disposed object by an electronic device according to an embodiment of the disclosure.

Referring to FIG. 19, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may divide a virtual space into a plurality of areas, and may dispose a background image 1910 or an object for each of the plurality of areas.

According to an embodiment, the electronic device may change the style of the background image 1910 or at least some of the objects. For example, the electronic device may change the background image 1910 to a line-type image 1920, a watercolor-type image 1921, or an oil painting-type image 1922.

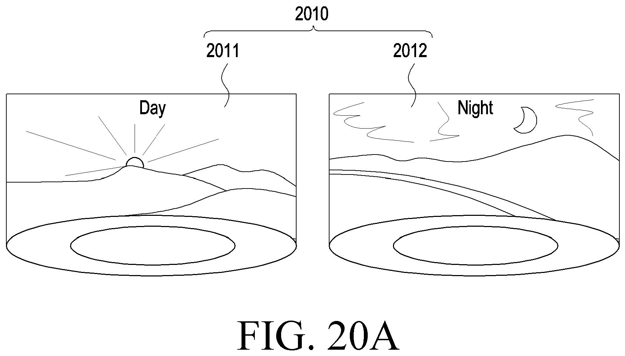

FIG. 20A is a view illustrating an operation of changing a disposed object by an electronic device according to an embodiment of the disclosure.

Referring to FIG. 20A, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may display one image 2010 generated by connecting (or merging) a plurality of images 2011 and 2012 as a background image.

For example, the electronic device may generate one 360-degree image 2010 by connecting the daytime image 2011 and the night image 2012 of one place. According to an embodiment, the electronic device may display the 360-degree image 2010 so that the daytime image 2011 is disposed in front of the user and the night image 2012 is disposed behind the user.

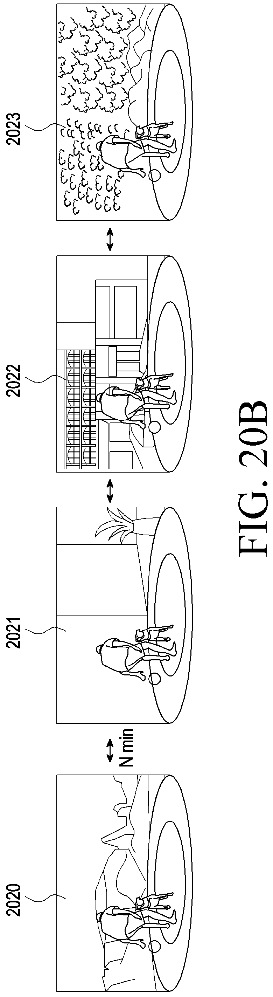

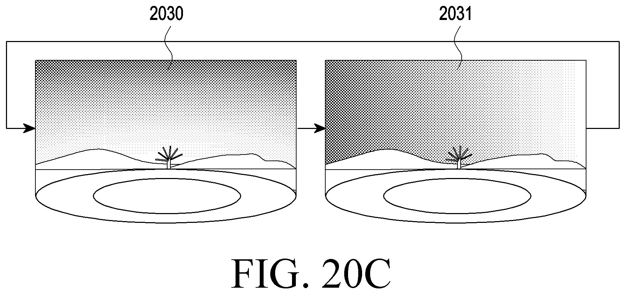

According to an embodiment, when applying a plurality of contents (e.g., images or videos) to a virtual space, the electronic device may change the content applied every set time, as shown in FIG. 20B, or may change the attribute of the content over time, as shown in FIG. 20C. According to an embodiment, when a user input (e.g., a swipe) is received, the electronic device may change the content applied to the virtual space.

FIG. 20B is a view illustrating an operation of changing a disposed object by an electronic device according to an embodiment of the disclosure.

Referring to FIG. 20B, the electronic device may change the content applied to the virtual space among a background image 2020 and the plurality of contents 2021, 2022, and 2023 every predetermined time (e.g., n minutes). According to an embodiment, the electronic device may dispose the background image 2020 and at least one object in the virtual space. According to an embodiment, the electronic device may change the background image 2020 every predetermined time while maintaining at least one object.

According to an embodiment, the electronic device may slide the displayed content every predetermined time or replace the displayed content with another content through fade-in/out. According to an embodiment, the electronic device may sequentially display the background image 2020 and the plurality of contents 2021, 2022, and 2023 every predetermined time based on a set order.

FIG. 20C is a view illustrating an operation of changing a disposed object by an electronic device according to an embodiment of the disclosure.

Referring to FIG. 20C, the electronic device may change the same content according to the time and/or season. For example, the electronic device may change the attributes of the same content based on the time and/or season.

According to an embodiment, in a state in which a first content 2030 is applied to the virtual space, the electronic device may display a second content 2031 in which the attribute, such as the color of the background image is changed based on the passage of time and/or the seasonal change. For example, the first content 2030 may correspond to daytime, and the second content 2031 may correspond to sunset. According to an embodiment, the electronic device may sequentially move the brightest portion to the right and sequentially change the background color to purple over time from the first content 2030 in which the brightest portion corresponding to the position of the sun is positioned at the center and the sky which is the background is blue during daytime. According to an embodiment, the electronic device may display the second content 2031 in which the brightest portion is on the right and the sky is purple at a time corresponding to sunset.

According to an embodiment, the electronic device may change not only the attributes of the background image, but also the object image (e.g., trees, plants) included in the background image and the object disposed to be spaced apart from the background image, based on the passage of time and/or seasonal change. For example, the electronic device may change the size of a tree image included in the background image or a tree disposed to be spaced apart from the background image over time, and may make a change so that leaves to sprout or fall according to the seasonal change.

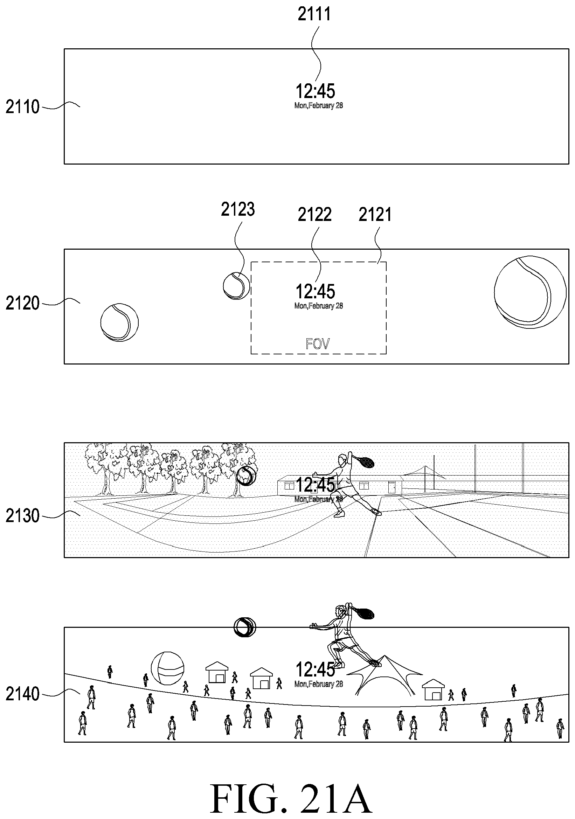

FIG. 21A is a view illustrating an operation of disposing an object on a lock screen or an always on display (AOD) screen by an electronic device according to an embodiment of the disclosure. According to an embodiment, a lock screen or an AOD screen 2110, 2120, 2130, or 2140 illustrated in FIG. 21A may be a 360-degree panoramic, spherical, or hemi-spherical image disposed in the virtual space.

Referring to FIG. 21A, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may maintain only clock content 2111 included in the lock screen or the AOD screen 2110 while dimming the rest.

According to an embodiment, the electronic device may dispose a clock content 2122 in an FOV 2121, and may display the dimmed lock screen or AOD screen 2120 other than the clock content 2122. According to an embodiment, floating objects 2123 may display the lock screen or the AOD screen 2110 disposed in the area other than the FOV. According to an embodiment, the floating objects 2123 may be disposed in the virtual space while being spaced apart from the background image. According to an embodiment, the floating objects 2123 may interact with the user.

According to an embodiment, the electronic device may display the lock screen or the AOD screen 2130 in which the rest except for the clock content is blurred to enhance security. According to an embodiment, the electronic device may display a deblurred lock screen or AOD screen based on performing authentication for releasing the security like in biometric recognition.

According to an embodiment, the electronic device may display a lock screen or an AOD screen 2140 including an image of a category similar to the background image other than clock content to enhance security. According to an embodiment, the electronic device may display the image or object related to the background image on the image of the similar category while being blurred.

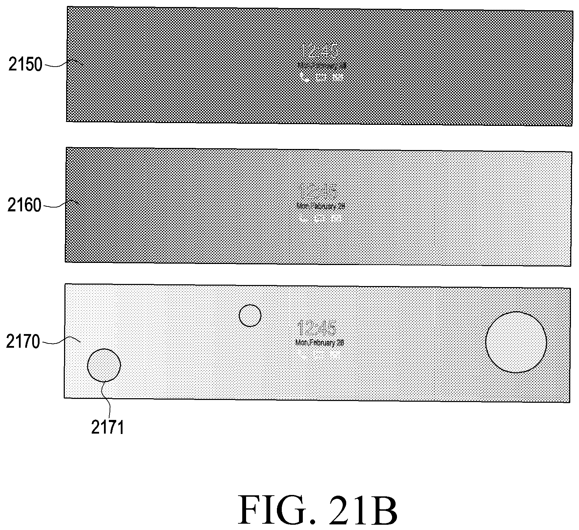

FIG. 21B is a view illustrating an operation of disposing an object on a lock screen or an AOD screen by an electronic device according to an embodiment of the disclosure. According to an embodiment, the lock screen or the AOD screens 2150, 2160, and 2170 illustrated in FIG. 21B may be a 360-degree panoramic, spherical, or hemi-spherical image disposed in the virtual space.

Referring to FIG. 21B, the electronic device may display a lock screen or an AOD screen 2150 in which a representative color extracted from the background image is displayed as a single color. According to an embodiment, the electronic device may display a lock screen or an AOD screen 2160 which is displayed by gradating a plurality of extracted colors from the background image.

According to an embodiment, the electronic device may display a lock screen or an AOD screen 2170 displaying at least one object 2171 (e.g., a floating object) on a monochromatic or gradated background.

According to an embodiment, the at least one object 2171 may be disposed in the virtual space while being spaced apart from the background image. According to an embodiment, the at least one object 2171 may interact with the user.

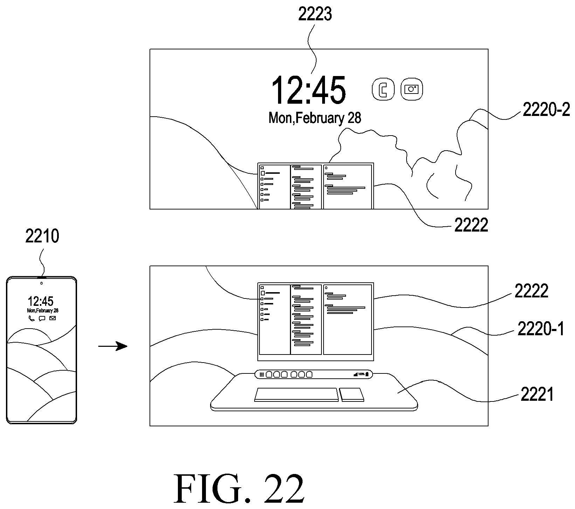

FIG. 22 is a view illustrating a virtual space displayed according to rotation by an electronic device according to an embodiment of the disclosure.

Referring to FIG. 22, an electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4) may generate an expanded image 2220-1 or 2220-2 based on a 2D image 2210. According to an embodiment, the expanded image 2220-1 or 2220-2 may be a 360-degree panoramic image, a spherical image, or a hemi-spherical image.

According to an embodiment, the electronic device may display the expanded image 2220-1 or 2220-2 in the 3D background area. According to an embodiment, the electronic device may apply an object (i.e., a board 2221 or a virtual monitor screen 2222) related to a workspace to a virtual space in which the expanded image 2220-1 or 2220-2 is displayed in a 3D background area. For example, the electronic device may include the board 2221 or the virtual monitor screen 2222 including a function related to performing a task. According to an embodiment, the board 2221 may include an icon of an application related to a task and a widget for a function (e.g., a memo or a keyboard) related to performing a task. According to an embodiment, the virtual monitor screen 2222 may display an execution screen of an application related to a task. According to an embodiment, the electronic device may display an operation based on a user input performed on the virtual monitor screen 2222 or a user input performed through the board 2221.

According to an embodiment, when the user's gaze or the user's head moves, the electronic device may change the FOV in the virtual space based on the gaze or the user's head movement. According to an embodiment, the electronic device may display a screen based on the changed FOV.

For example, when the user looks up while the first background image 2220-1 is displayed and the virtual monitor screen 2222 is displayed on the board 2221 and above the board 2221, the electronic device may change the FOV in the virtual space upward and display a screen based on the changed FOV. According to an embodiment, the electronic device may display the second background image 2220-2, which is an FOV higher than the first background image 2220-1. According to an embodiment, the electronic device may move the position of the virtual monitor screen 2222 downward in the FOV and may display a time content 2223 disposed above the virtual monitor screen 2222 in the FOV. According to an embodiment, the electronic device may also display function icons disposed around the time content 2223.

As such, the electronic device may apply the image desired by the user to the virtual workspace.

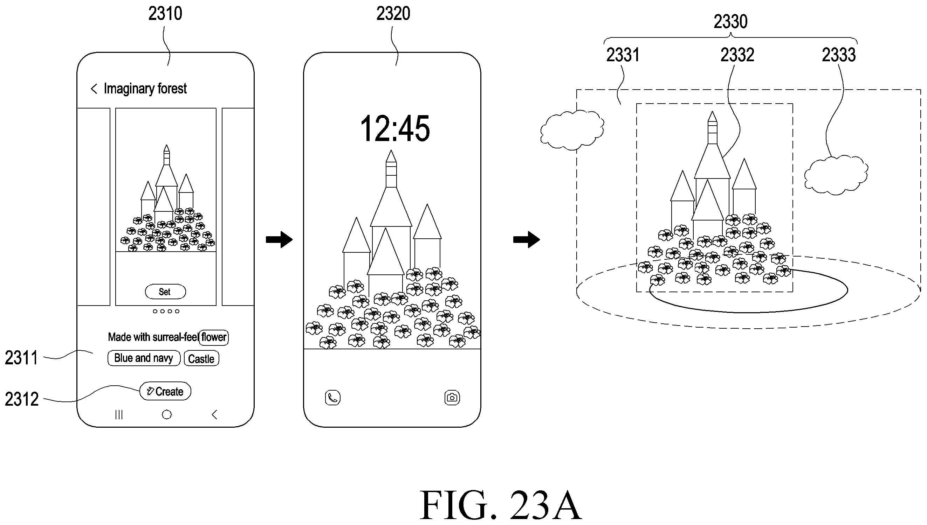

FIG. 23A is a view illustrating an operation of displaying an image generated based on a keyword as a 3D virtual image in an external electronic device by an electronic device according to an embodiment of the disclosure.

Referring to FIG. 23A, an external electronic device (e.g., the external electronic device 104 of FIGS. 1A and 1B) may display a screen 2310 for generating a background (wallpaper) image. The screen 2310 for generating the background image may include at least one keyword 2311 to be applied to the background image to be generated and a button 2312 for commanding an operation of generating the background image.

According to an embodiment, the at least one keyword 2311 to be applied to the background image to be generated may be at least one selected from among a plurality of keywords by a user input or a text input made by a user input. According to an embodiment, the plurality of selectable keywords may be pre-stored for each category related to the image style. According to an embodiment, the external electronic device may display an example image together for each of the plurality of keywords.

According to an embodiment, the external electronic device may apply a background image 2320 generated based on the at least one keyword 2311 as a background screen. For example, when flower, blue, navy, and castle are included in the at least one keyword 2311, the generated background image 2320 may include a blue-roofed castle surrounded by blue-colored flowers and a blue sky.

According to an embodiment, the background image 2320 applied to the external electronic device may be applied to an interoperating electronic device (e.g., the electronic device 101 of FIGS. 1A and 1B, the processor 120 of FIGS. 1A and 1B, the wearable electronic device 200 of FIG. 2, the wearable electronic device 300 of FIG. 3A, the wearable electronic device 300 of FIG. 3B, or the electronic device 400 of FIG. 4). For example, the external electronic device and the electronic device may interoperate with each other through an account.

According to an embodiment, the electronic device may generate a 3D virtual image 2330 based on the 2D background image 2320 received from the external electronic device. For example, the 3D virtual image 2330 may include a background image 2331 applied to the background area of the first depth in the 3D virtual space, an object image 2332 applied to the 3D virtual space at the second depth, and at least one newly generated object 2333. For example, the at least one newly generated object 2333 may be generated based on the attribute of the background image 2331 and/or the attribute of the object image 2332, and may be disposed at a third depth different from the second depth or in the ceiling area (or a public area).

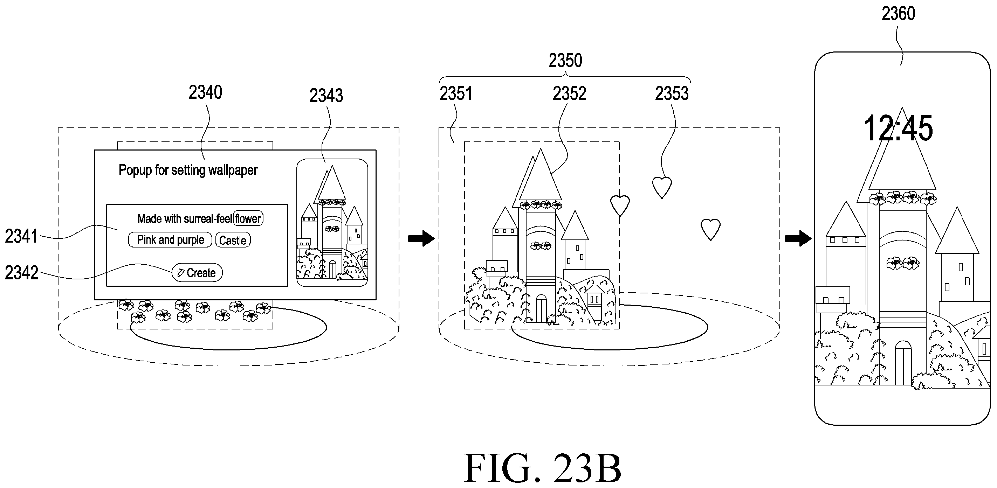

FIG. 23B is a view illustrating an operation of applying an image changed based on a keyword in state in which a 3D virtual image is displayed, to an external electronic device, by an electronic device according to an embodiment of the disclosure.

Referring to FIG. 23B, when a user input for changing the 3D virtual image is received while the 3D virtual image is displayed, the electronic device may display a screen 2340 for changing the 3D virtual image. According to an embodiment, the electronic device may change the displayed 3D virtual image to an image generated based on the changed keyword by changing the keyword.

According to an embodiment, the screen 2340 for changing the 3D virtual image may include at least one keyword 2341 to be applied to the 3D virtual image to be generated and a button 2342 for commanding an operation of generating the 3D virtual image. According to an embodiment, the screen 2340 for changing the 3D virtual image may further include a preview 2343 of an image to be generated based on at least one keyword. For example, the preview 2343 of the image may be a 2D image.

According to an embodiment, the at least one keyword 2341 to be applied to the 3D virtual image to be generated may be one selected from among a plurality of keywords by a user input, or a text input made by a user input. According to an embodiment, the plurality of selectable keywords may be pre-stored for each category related to the image style. According to an embodiment, the external electronic device may display an example image together for each of the plurality of keywords.

According to an embodiment, the external electronic device may display the 3D virtual image 2350 generated based on the at least one keyword 2341 in the 3D virtual space. For example, when flower, pink, purple, and castle are included in the at least one keyword 2341, the generated 3D virtual image 2350 may include a sky image 2351 of a changed color applied to the background area of the first depth of the 3D virtual space, a pink-roofed castle image 2352 surrounded by pink flowers applied to the 3D virtual space at the second depth, and at least one pink heart image 2353 disposed in the ceiling area of the 3D virtual space.

According to an embodiment, the 3D virtual image 2350 applied to the electronic device may be applied, as a background image 2360, to the background screen of the interacting external electronic device. For example, the electronic device and the external electronic device may interact with each other through an account.

According to an embodiment, the external electronic device may generate the 2D background image 2360 based on the 3D virtual image 2350 received from the electronic device. According to an embodiment, the 2D background image 2360 may be applied to the home screen and/or the lock screen of the external electronic device.

According to the disclosure, the electronic device may generate an image suitable for a virtual space by obtaining an expanded image through out-painting and in-painting based on a 2D image. According to the disclosure, it is possible to provide a sense of immersion to the user by separating the background and objects in an image and disposing them at different depths in a virtual space. According to the disclosure, it is possible to provide a sense of immersion to the user in a virtual space by mapping audio according to the attributes of the background and objects and outputting them.

According to an embodiment, an electronic device (e.g., the electronic device 101 of FIGS. 1A and 1B) may comprise a display (e.g., the display module 160 of FIGS. 1A and 1B), a sensor (e.g., the sensor module 176 of FIGS. 1A and 1B), a processor (e.g., the processor 120 of FIGS. 1A and 1B), and memory (e.g., the memory 130 of FIGS. 1A and 1B) including instructions that, when executed by the processor, enable the electronic device to perform operations.

According to an embodiment, the instructions may, when executed by the processor, enable the electronic device to obtain, via the sensor, information relating to a field of view of a user.

According to an embodiment, the instructions may, when executed by the processor, enable the electronic device to obtain a two-dimensional (2D) image.

According to an embodiment, the instructions may, when executed by the processor, enable the electronic device to identify a first portion of the 2D image to be applied as a background image of a three-dimensional (3D) virtual space.

According to an embodiment, the instructions may, when executed by the processor, enable the electronic device to identify a second portion of the 2D image corresponding to an object of interest.

According to an embodiment, the instructions may, when executed by the processor, enable the electronic device to generate an expanded image corresponding to the first portion of the 2D image.

According to an embodiment, the instructions may, when executed by the processor, enable the electronic device to generate a 3D virtual image by applying a first depth to the expanded image and a second depth to the second portion of the 2D image.

According to an embodiment, the instructions may, when executed by the processor, enable the electronic device to display a portion of the 3D virtual image based on the information relating to the field of view of the user.

According to an embodiment, the instructions may, when executed by the processor, enable the electronic device to display the portion of the 3D virtual image with a size determined based on at least one of a size of the field of view or a direction of the field of view, corresponding to the information relating to the field of view.

According to an embodiment, the instructions may, when executed by the processor, enable the electronic device to generate the expanded image such that a generated image portion of the expanded image includes an area extending from a first boundary of the 2D image in a first direction and an area extending from a second boundary different from the first boundary in a second direction different from the first direction.

According to an embodiment, a background area of the 3D virtual space may be configured in a shape of a curved surface whose distance from a point set in the 3D virtual space is the first depth.

According to an embodiment, the instructions may, when executed by the processor, enable the electronic device to correct the expanded image to correspond to the shape of the curved surface.

According to an embodiment, the instructions may, when executed by the processor, enable the electronic device to, as part of generating the expanded image, generate an area corresponding to a first range belonging to a main movable range of the field of view by performing out-painting based on the 2D image, and generate an area corresponding to a second range, which is different from the first range, by performing in-painting, based on an image generated in the area corresponding to the first range, at least based on the information relating to the field of view.

According to an embodiment, the instructions may, when executed by the processor, enable the electronic device to as part of generating the expanded image, generate an image portion to be symmetrical with respect to at least one of a boundary line or an imaginary line at one or more points, of the image portion of the expanded image, which is generated based on the 2D image.

According to an embodiment, the instructions may, when executed by the processor, enable the electronic device to, as part of generating the expanded image, generate an image portion by fading-in based on at least one of a boundary line or an imaginary line at one or more points, of the image which is generated based on the 2D image.

According to an embodiment, the instructions may, when executed by the processor, enable the electronic device to receive the 2D image through an external electronic device related to a user account of the electronic device.

According to an embodiment, the electronic device may be a head-mountable display (HMD) device.

According to an embodiment, the electronic device may further comprise communication circuitry.

According to an embodiment, the instructions may, when executed by the processor, enable the electronic device to obtain, through the communication circuitry, the 2D image from a first external electronic device.

According to an embodiment, the instructions may, when executed by the processor, enable the electronic device to transmit, through the communication circuitry, the 2D image obtained from the first external electronic device to a second external electronic device.

According to an embodiment, the instructions may, when executed by the processor, enable the electronic device to receive, through the communication circuitry, the expanded image from the second external electronic device in response to the transmission.

According to an embodiment, the instructions may, when executed by the processor, enable the electronic device to determine an attribute of the object of interest included in the second portion.

According to an embodiment, the instructions may, when executed by the processor, enable the electronic device to add a moving graphic effect to the object of interest at least partially based on the attribute of the object of interest.

According to an embodiment, the instructions may, when executed by the processor, enable the electronic device to obtain environmental information.

According to an embodiment, the instructions may, when executed by the processor, enable the electronic device to determine an attribute of the graphic effect at least based on the environmental information.

According to an embodiment, the instructions may, when executed by the processor, enable the electronic device to identify contact information related to the object of interest.

According to an embodiment, the instructions may, when executed by the processor, enable the electronic device to provide the contact information in response to receiving a user input to the object of interest.

According to an embodiment, the instructions may, when executed by the processor, enable the electronic device to receive an event related to the contact information.

According to an embodiment, the instructions may, when executed by the processor, enable the electronic device to add or change the graphic effect related to the object of interest based on the event.

According to an embodiment, the instructions may, when executed by the processor, enable the electronic device to, as part of generating the 3D virtual image, determine an attribute of the object of interest included in the second portion, and selectively dispose, at least partially based on the attribute of the object of interest, the second portion at one of a first point which is set to enable interaction with the user or a second point which is set not to interact with the user.

According to an embodiment, a method for controlling an electronic device may comprise obtaining, via a sensor of the electronic device, information relating to a field of view of a user.

According to an embodiment, the method for controlling the electronic device may comprise obtaining a two-dimensional (2D) image.

According to an embodiment, the method for controlling the electronic device may comprise identifying a first portion of the 2D image to be applied as a background image of a three-dimensional (3D) virtual space.

According to an embodiment, the method for controlling the electronic device may comprise identifying a second portion of the 2D image corresponding to an object of interest.

According to an embodiment, the method for controlling the electronic device may comprise generating an expanded image corresponding to the first portion of the 2D image.

According to an embodiment, the method for controlling the electronic device may comprise generating a 3D virtual image by applying a first depth to the expanded image and a second depth to the second portion of the 2D image.

According to an embodiment, the method for controlling the electronic device may comprise displaying a portion of the 3D virtual image based on the information relating to the field of view of the user.

According to an embodiment, generating the 3D virtual image may include determining an attribute of the object of interest included in the second portion, and selectively disposing, at least partially based on the attribute of the object of interest, the second portion at one of a first point which is set to enable interaction with the user or a second point which is set not to interact with the user.

According to an embodiment, generating the 3D virtual image may include determining an attribute of the object of interest included in the second portion and adding a moving graphic effect to the object of interest at least partially based on the attribute of the object of interest.

According to an embodiment, in a non-transitory computer-readable recording medium storing one or more programs, the one or more programs may store instructions enabling an electronic device to obtain, via the sensor, information relating to a field of view of a user.

According to an embodiment, the one or more programs may store instructions to enable the electronic device to obtain a two-dimensional (2D) image.

According to an embodiment, the one or more programs may store instructions to enable the electronic device to identify a first portion of the 2D image to be applied as a background image of a three-dimensional (3D) virtual space.

According to an embodiment, the one or more programs may store instructions to enable the electronic device to identify a second portion of the 2D image corresponding to an object of interest.

According to an embodiment, the one or more programs may store instructions to enable the electronic device to generate an expanded image corresponding to the first portion of the 2D image.

According to an embodiment, the one or more programs may store instructions to enable the electronic device to generate a 3D virtual image by applying a first depth to the expanded image and a second depth to the second portion of the 2D image.

According to an embodiment, the one or more programs may store instructions to enable the electronic device to display a portion of the 3D virtual image based on the information relating to the field of view of the user.

According to an embodiment, an electronic device may include a display, a sensor for sensing a user's gaze as at least part of field of view information, memory for storing a virtual space including a three-dimensional (3D) background area, and a processor operatively connected to the sensor and the memory.

According to an embodiment, the memory may store instructions that, when executed by the processor, enable the electronic device to obtain a two-dimensional (2D) image.

According to an embodiment, the memory may store instructions that, when executed by the processor, enable the electronic device to generate an expanded image further including an image portion generated in an outward direction of the 2D image so that an image is continuous at a boundary corresponding to at least one of edges of the 2D image, based on an attribute of the 2D image.

According to an embodiment, the memory may store instructions that, when executed by the processor, enable the electronic device to make a setting to include the expanded image in at least a portion of the 3D background area.

According to an embodiment, the memory may store instructions that, when executed by the processor, enable the electronic device to display at least a portion of the virtual space including the set 3D background area, based on the field of view information.

According to an embodiment, the memory may store instructions that, when executed by the processor, enable the electronic device to generate the image portion with a size determined based on at least one of a size of the field of view or a direction of the field of view, corresponding to the field of view information.

According to an embodiment, the memory may store instructions that, when executed by the processor, enable the electronic device to generate the expanded image such that a generated image portion of the expanded image includes an area extending from a first boundary of the 2D image in a first direction and an area extending from a second boundary different from the first boundary in a second direction different from the first direction.

According to an embodiment, at least a portion of the 3D background area may be configured in a curved surface shape having substantially the same distance from a point set in the virtual space.

According to an embodiment, the memory may store instructions that, when executed by the processor, enable the electronic device to correct the expanded image to correspond to the shape of the curved surface.

According to an embodiment, the memory may store instructions that, when executed by the processor, enable the electronic device to, as part of generating the expanded image, generate an area corresponding to a first range belonging to a main movable range of the field of view by performing out-painting based on the 2D image, and generate an area corresponding to a second range, which is different from the first range, by performing in-painting, based on an image generated in the area corresponding to the first range, at least based on the field of view information.

According to an embodiment, the memory may store instructions that, when executed by the processor, enable the electronic device to, as part of generating the expanded image, generate an image portion to be symmetrical with respect to at least one of a boundary line or an imaginary line at one or more points, of the image portion.

According to an embodiment, the memory may store instructions that, when executed by the processor, enable the electronic device to, as part of generating the expanded image, generate an image portion by fading-in based on at least one of a boundary line or an imaginary line at one or more points of the image portion.

According to an embodiment, the memory may store instructions that, when executed by the processor, enable the electronic device to receive the 2D image through an external electronic device related to a user account of the electronic device.

According to an embodiment, the electronic device may further comprise a communication module.

According to an embodiment, the memory may store instructions that, when executed by the processor, enable the electronic device to, as part of generating the expanded image, transfer, through the communication device, a generation command prompt for generating the expanded image to the external device.

According to an embodiment, the memory may store instructions that, when executed by the processor, enable the electronic device to receive the expanded image generated based on the generation command prompt from the external device.

According to an embodiment, the generation command prompt may store instructions for generating, based on an attribute of the 2D image, an image portion generated in an outward direction of the 2D image so that the image is continuous at a boundary corresponding to at least one of edges of the 2D image.

According to an embodiment, the generation command prompt may store instructions for generating an image portion with a size determined based on at least one of a size of a field of view or a direction of the field of view corresponding to the field of view information.

According to an embodiment, the generation command prompt may store instructions for generating an expanded image so that the image portion includes an area extending from a first boundary of a 2D image in a first direction and an area extending from a second boundary different from the first boundary in a second direction different from the first direction.

According to an embodiment, at least a portion of the 3D background area may be configured in a curved shape having substantially the same distance from a point set in the virtual space.

According to an embodiment, the generation command prompt may store instructions for correcting the expanded image to correspond to a curved surface shape.

According to an embodiment, as part of an operation of generating an expanded image, the generation command prompt may store instructions to generate, by performing out-painting, an area corresponding to a first range belonging to a main movable range of a field of view, at least based on field of view information, based on a 2D image, and to generate, by performing in-painting, an area corresponding to a second range different from the first range, based on an image generated in an area corresponding to the first range.

According to an embodiment, as part of generating the expanded image, the generation command prompt may store instructions for generating the image portion to be symmetrical with respect to at least one of a virtual line or a boundary line at one or more points of the image portion.

According to an embodiment, as part of generating the expanded image, the generation command prompt may store instructions for generating the image portion by fading in/out based on at least one of a virtual line or a boundary line at one or more points of the image portion.

According to an embodiment, a head-mountable display (HMD) device may include a display, a sensor configured to detect a gaze of a user of the HMD as part of field of view information, memory configured to store image information indicating a virtual space including a 3D background area, and a processor operatively connected to the display, the sensor, and the memory.

According to an embodiment, the memory may store instructions that, when executed by the processor, enable the head-mountable display device to obtain a 2D image.

According to an embodiment, the memory may store instructions that, when executed by the processor, enable the head-mountable display device to display at least a portion of the virtual space through the display so that an expanded image corresponding to the 2D image is included in at least a portion of the 3D background area.

According to an embodiment, the expanded image may include a first image portion corresponding to the 2D image, a second image portion corresponding to an image continuously extended in an outward direction from an image of a first boundary portion corresponding to an edge of the 2D image, and a third image portion corresponding to an image continuously extended in a second direction opposite to the first direction from an image of a second boundary portion corresponding to an edge different from the first boundary of the 2D image.

According to an embodiment, the memory may store instructions that, when executed by the processor, enable the head-mountable display device to generate the expanded image based on an attribute of the 2D image.

According to an embodiment, at least a portion of the 3D background area may be configured in a curved surface shape having substantially the same distance from a point set in the virtual space.

According to an embodiment, the memory may store instructions that, when executed by the processor, enable the head-mountable display device to correct the expanded image to correspond to the shape of the curved surface.

According to an embodiment, the head-mountable display device may further comprise a communication module.

According to an embodiment, the memory may store instructions that, when executed by the processor, enable the head-mountable display device to obtain, through the communication module, the 2D image from a first external electronic device.

According to an embodiment, the memory may store instructions that, when executed by the processor, enable the head-mountable display device to transmit, through the communication module, the 2D image obtained from the first external electronic device to a second external electronic device.

According to an embodiment, the memory may store instructions that, when executed by the processor, enable the head-mountable display device to receive, through the communication module, the expanded image from the second external electronic device in response to the transmission.

According to an embodiment, the generation command prompt may store instructions for generating, based on an attribute of the 2D image, an image portion generated in an outward direction of the 2D image so that the image is continuous at a boundary corresponding to at least one of edges of the 2D image.

According to an embodiment, the expanded image received from the external device may be the image portion generated with a size determined based on at least one of a size of a field of view or a direction of the field of view corresponding to the field of view information.

According to an embodiment, the expanded image received from the external device may be generated to include an area extending from a first boundary of a 2D image in a first direction and an area extending from a second boundary different from the first boundary in a second direction different from the first direction.

According to an embodiment, at least a portion of the 3D background area may be configured in a curved surface shape having substantially the same distance from a point set in the virtual space.

According to an embodiment, the expanded image received from the external device may be one obtained by correcting the expanded image to correspond to the curved surface shape.

According to an embodiment, in the expanded image received from the external device, an area corresponding to a first range belonging to a main movable range of a field of view, at least based on field of view information, may be generated by performing out-painting based on a 2D image, and an area corresponding to a second range different from the first range may be generated by performing in-painting based on an image generated in an area corresponding to the first range.

According to an embodiment, the expanded image received from the external device may be the image portion generated to be symmetrical with respect to at least one of a virtual line or a boundary line at one or more points of the image portion.

According to an embodiment, the expanded image received from the external device may be the image portion generated by fading in/out based on at least one of a virtual line or a boundary line at one or more points of the image portion.

According to an embodiment, the memory may store instructions that, when executed by the processor, enable the head-mountable display device to receive the 2D image through an external electronic device related to a user account of the electronic device.

According to an embodiment, an electronic device may include a display, a sensor for sensing a user's gaze as at least part of field of view information, memory for storing a virtual space including a 3D background area, and a processor.

According to an embodiment, the memory may store instructions that, when executed by the processor, enable the electronic device to obtain a 2D image.

According to an embodiment, the memory may store instructions that, when executed by the processor, enable the electronic device to recognize a background area and an object area in the 2D image.

According to an embodiment, the memory may store instructions that, when executed by the processor, enable the electronic device to separate the object area from the 2D image.

According to an embodiment, the memory may store instructions that, when executed by the processor, enable the electronic device to generate an expanded image further including an image portion generated outside the background area to continue at a boundary of the background area, based on an attribute of the background area.

According to an embodiment, the memory may store instructions that, when executed by the processor, enable the electronic device to make a setting to include the expanded image in at least a portion of the 3D background area.

According to an embodiment, the memory may store instructions that, when executed by the processor, enable the electronic device to dispose the object area between a point set in the virtual space and the 3D background area in relation to the field of view information.

According to an embodiment, the memory may store instructions that, when executed by the processor, enable the electronic device to display at least a portion of the virtual space including the set 3D background area and the disposed object area, based on the field of view information.

According to an embodiment, the memory may store instructions that, when executed by the processor, enable the electronic device to, as at least part of generating the expanded image, generate an image in the object area by performing in-painting using at least a portion of the background area adjacent to the object area.

According to an embodiment, the memory may store instructions that, when executed by the processor, enable the electronic device to determine an attribute of an object included in the object area.

According to an embodiment, the memory may store instructions that, when executed by the processor, enable the electronic device to add a moving graphic effect to the object at least partially based on the attribute of the object.

According to an embodiment, the memory may store instructions that, when executed by the processor, enable the electronic device to obtain environmental information.

According to an embodiment, the memory may store instructions that, when executed by the processor, enable the electronic device to determine an attribute of the graphic effect at least based on the environmental information.

According to an embodiment, the memory may store instructions that, when executed by the processor, enable the electronic device to identify contact information related to the object area.

According to an embodiment, the memory may store instructions that, when executed by the processor, enable the electronic device to provide the contact information in response to receiving a user input to the object area.

According to an embodiment, the memory may store instructions that, when executed by the processor, enable the electronic device to receive an event related to the contact information.

According to an embodiment, the memory may store instructions that, when executed by the processor, enable the electronic device to add or change the graphic effect related to the object area based on the event.

According to an embodiment, the memory may store instructions that, when executed by the processor, enable the electronic device to, as part of disposing, determine an attribute of an object included in the object area and selectively dispose, at least partially based on the attribute of the object, the object area at one of a first point which is set to enable interaction with the user or a second point which is set not to interact with the user.

A method for controlling an electronic device according to an embodiment may include obtaining a 2D image.

According to an embodiment, the method may further include generating, based on an attribute of the 2D image, an expanded image including an image portion generated in an outward direction of the 2D image so that the image is continuous at a boundary corresponding to at least one of edges of the 2D image.

According to an embodiment, the method may further include setting the expanded image to be included in at least a portion of the 3D background area.

According to an embodiment, the method may further include displaying at least a portion of the virtual space including the set 3D background area, based on the field of view information.

According to an embodiment, generating the expanded image may generate the image portion with a size determined based on at least one of a size of a field of view or a direction of the field of view corresponding to the field of view information.

According to an embodiment, generating the expanded image may generate an expanded image so that the image portion includes an area extending from a first boundary of a 2D image in a first direction and an area extending from a second boundary different from the first boundary in a second direction different from the first direction.

According to an embodiment, at least a portion of the 3D background area may be configured in a curved surface shape to have substantially the same distance from a point set in the virtual space.

According to an embodiment, generating the expanded image may further include correcting the expanded image to correspond to the curved surface shape.

According to an embodiment, generating the expanded image may generate an area corresponding to a first range belonging to a main movable range of a field of view, at least based on field of view information, by performing out-painting based on a 2D image, and generate an area corresponding to a second range different from the first range, by performing in-painting based on an image generated in an area corresponding to the first range.

According to an embodiment, generating the expanded image may generate the image portion to be symmetrical with respect to at least one of a virtual line or a boundary line at one or more points of the image portion.

According to an embodiment, generating the expanded image may generate the image portion by fading in based on at least one of a virtual line or a boundary line at one or more points of the image portion.

According to an embodiment, obtaining the 2D image may receive the 2D image through an external electronic device related to a user account of the electronic device.

According to an embodiment, a method for controlling the head-mountable display (HMD) device may include obtaining a 2D image.

According to an embodiment, the method may further include displaying, through a display, at least a portion of the virtual space so that an expanded image corresponding to the 2D image is included in at least a portion of the 3D background area.

According to an embodiment, the expanded image may include a first image portion corresponding to the 2D image, a second image portion corresponding to an image continuously extended in an outward direction from an image of a first boundary portion corresponding to an edge of the 2D image, and a third image portion corresponding to an image continuously extended in a second direction opposite to the first direction from an image of a second boundary portion corresponding to an edge different from the first boundary of the 2D image.

According to an embodiment, a method for controlling the head-mountable display device may comprise generating the expanded image corresponding to an attribute of the 2D image.

According to an embodiment, at least a portion of the 3D background area may be configured in a curved surface shape having substantially the same distance from a point set in the virtual space.

According to an embodiment, the method for controlling the head-mountable display device may further comprise correcting the expanded image to correspond to the curved surface shape.

According to an embodiment, obtaining the 2D image may include obtaining the 2D image from a first external electronic device through a communication module.

According to an embodiment, the method for controlling the head-mountable display device may further comprise transmitting, through the communication module, the 2D image obtained from the first external electronic device to a second external electronic device.

According to an embodiment, the method for controlling the head-mountable display device may further comprise receiving, through the communication module, the expanded image from the second external electronic device in response to the transmission.

According to an embodiment, the method for controlling the electronic device may comprise obtaining a two-dimensional (2D) image.

According to an embodiment, the method may further include recognizing a background area and an object area in the 2D image.

According to an embodiment, the method may further include separating the object area from the 2D image.

According to an embodiment, the method may further include generating an expanded image including an image portion generated outside the background area to continue at a boundary of the background area, based on an attribute of the background area.

According to an embodiment, the method may further include setting the expanded image to be included in at least a portion of the 3D background area.

According to an embodiment, the method may further include disposing the object area between a point set in the virtual space and the 3D background area in relation to the field of view information.

According to an embodiment, the method may further include displaying at least a portion of the virtual space including the set 3D background area and the disposed object area, based on the field of view information.

According to an embodiment, generating the expanded image may generate an image in the object area by performing in-painting using at least a portion of the background area adjacent to the object area.

According to an embodiment, the method for controlling the electronic device may further comprise determining an attribute of an object included in the object area.

According to an embodiment, the method for controlling the electronic device may further comprise adding a moving graphic effect to the object at least partially based on the attribute of the object.

According to an embodiment, the method for controlling the electronic device may further comprise obtaining environmental information.

According to an embodiment, the method for controlling the electronic device may further comprise determining an attribute of the graphic effect at least based on the environmental information.

According to an embodiment, the method for controlling the electronic device may further comprise identifying contact information related to the object area.

According to an embodiment, the method for controlling the electronic device may further comprise providing the contact information in response to receiving a user input to the object area.

According to an embodiment, the method for controlling the electronic device may further comprise receiving an event related to the contact information.

According to an embodiment, the method for controlling the electronic device may further comprise adding or changing the graphic effect related to the object area based on the event.

According to an embodiment, the disposing may determine an attribute of an object included in the object area, and selectively dispose, at least partially based on the attribute of the object, the object area at one of a first point which is set to enable interaction with the user or a second point which is set not to interact with the user.

According to an embodiment, in a non-transitory computer-readable recording medium storing one or more programs, the one or more programs may store instructions enabling an electronic device to obtain a 2D image.

According to an embodiment, the one or more programs may store instructions enabling the electronic device to generate an expanded image further including an image portion generated in an outward direction of the 2D image so that an image is continuous at a boundary corresponding to at least one of edges of the 2D image, based on an attribute of the 2D image.

According to an embodiment, the one or more programs may store instructions enabling the electronic device to make a setting to include the expanded image in at least a portion of the 3D background area.

According to an embodiment, the one or more programs may store instructions enabling the electronic device to display at least a portion of the virtual space including the set 3D background area, based on the field of view information.

According to an embodiment, the one or more programs may store instructions that enable the electronic device to generate the image portion with a size determined based on at least one of a size of the field of view or a direction of the field of view, corresponding to the field of view information.

According to an embodiment, the one or more programs may store instructions that enable the electronic device to generate the expanded image such that a generated image portion of the expanded image includes an area extending from a first boundary of the 2D image in a first direction and an area extending from a second boundary different from the first boundary in a second direction different from the first direction.

According to an embodiment, at least a portion of the 3D background area may be configured in a curved surface shape having substantially the same distance from a point set in the virtual space.

According to an embodiment, the one or more programs may store instructions that enable the electronic device to correct the expanded image to correspond to a curved surface shape.

According to an embodiment, the one or more programs may store instructions that enable the electronic device to, as part of generating the expanded image, generate an area corresponding to a first range belonging to a main movable range of the field of view by performing out-painting based on the 2D image, and generate an area corresponding to a second range, which is different from the first range, by performing in-painting, based on an image generated in the area corresponding to the first range, at least based on the field of view information.

According to an embodiment, the one or more programs may store instructions that enable the electronic device to, as part of generating the expanded image, generate an image portion to be symmetrical with respect to at least one of a boundary line or an imaginary line at one or more points, of the image portion.

According to an embodiment, the one or more programs may store instructions that enable the electronic device to, as part of generating the expanded image, generate an image portion by fading-in based on at least one of a boundary line or an imaginary line at one or more points of the image portion.

According to an embodiment, the one or more programs may store instructions that enable the electronic device to receive the 2D image through an external electronic device related to a user account of the electronic device.

According to an embodiment, the one or more programs may store instructions that enable the electronic device to, as part of generating the expanded image, transfer, through the communication device, a generation command prompt for generating the expanded image to the external device.

According to an embodiment, the one or more programs may store instructions that enable the electronic device to receive the expanded image generated based on the generation command prompt from the external device.

According to an embodiment, the generation command prompt may store instructions for generating, based on an attribute of the 2D image, an image portion generated in an outward direction of the 2D image so that the image is continuous at a boundary corresponding to at least one of edges of the 2D image.

According to an embodiment, the generation command prompt may store instructions for generating an image portion with a size determined based on at least one of a size of a field of view or a direction of the field of view corresponding to the field of view information.

According to an embodiment, the generation command prompt may store instructions for generating an expanded image so that the image portion includes an area extending from a first boundary of a 2D image in a first direction and an area extending from a second boundary different from the first boundary in a second direction different from the first direction.

According to an embodiment, at least a portion of the 3D background area may be configured in a curved surface shape having substantially the same distance from a point set in the virtual space.

According to an embodiment, the generation command prompt may store instructions for correcting the expanded image to correspond to a curved surface shape.

According to an embodiment, as part of an operation of generating an expanded image, the generation command prompt may store instructions to generate, by performing out-painting, an area corresponding to a first range belonging to a main movable range of a field of view, at least based on field of view information, based on a 2D image, and to generate, by performing in-printing, an area corresponding to a second range different from the first range, based on an image generated in an area corresponding to the first range.

According to an embodiment, as part of generating the expanded image, the generation command prompt may store instructions for generating the image portion to be symmetrical with respect to at least one of a virtual line or a boundary line at one or more points of the image portion.

According to an embodiment, as part of generating the expanded image, the generation command prompt may store instructions for generating the image portion by fading in/out based on at least one of a virtual line or a boundary line at one or more points of the image portion.

According to an embodiment, in a non-transitory computer-readable recording medium storing one or more programs, the one or more programs may store instructions enabling a head-mountable display (HMD) device to obtain a 2D image.

According to an embodiment, the one or more programs may store instructions enabling the head-mountable display device to display at least a portion of the virtual space through the display so that an expanded image corresponding to the 2D image is included in at least a portion of the 3D background area.

According to an embodiment, the expanded image may include a first image portion corresponding to the 2D image, a second image portion corresponding to an image continuously extended in an outward direction from an image of a first boundary portion corresponding to an edge of the 2D image, and a third image portion corresponding to an image continuously extended in a second direction opposite to the first direction from an image of a second boundary portion corresponding to an edge different from the first boundary of the 2D image.

According to an embodiment, the one or more programs may store instructions that enable the head-mountable display device to generate the expanded image based on an attribute of the 2D image.

According to an embodiment, at least a portion of the 3D background area may be configured in a curved surface shape having substantially the same distance from a point set in the virtual space.

According to an embodiment, the one or more programs may store instructions that enable the head-mountable display device to correct the expanded image to correspond to the shape of the curved surface.

According to an embodiment, the one or more programs may store instructions that enable the head-mountable display device to obtain, through the communication module, the 2D image from a first external electronic device.

According to an embodiment, the one or more programs may store instructions that enable the head-mountable display device to transmit, through the communication module, the 2D image obtained from the first external electronic device to a second external electronic device.

According to an embodiment, the one or more programs may store instructions that enable the head-mountable display device to receive, through the communication module, the expanded image from the second external electronic device in response to the transmission.

According to an embodiment, the generation command prompt may store instructions for generating, based on an attribute of the 2D image, an image portion generated in an outward direction of the 2D image so that the image is continuous at a boundary corresponding to at least one of edges of the 2D image.

According to an embodiment, the expanded image received from the external device may be the image portion generated with a size determined based on at least one of a size of a field of view or a direction of the field of view corresponding to the field of view information.

According to an embodiment, the expanded image received from the external device may be generated to include an area extending from a first boundary of a 2D image in a first direction and an area extending from a second boundary different from the first boundary in a second direction different from the first direction.

According to an embodiment, at least a portion of the 3D background area may be configured in a curved surface shape having substantially the same distance from a point set in the virtual space.

According to an embodiment, the expanded image received from the external device may be one obtained by correcting the expanded image to correspond to the curved surface shape.

According to an embodiment, in the expanded image received from the external device, an area corresponding to a first range belonging to a main movable range of a field of view, at least based on field of view information, may be generated by performing out-painting based on a 2D image, and an area corresponding to a second range different from the first range may be generated by in-painting based on an image generated in an area corresponding to the first range.

According to an embodiment, the expanded image received from the external device may be the image portion generated to be symmetrical with respect to at least one of a virtual line or a boundary line at one or more points of the image portion.

According to an embodiment, the expanded image received from the external device may be the image portion generated by fading in/out based on at least one of a virtual line or a boundary line at one or more points of the image portion.

According to an embodiment, the one or more programs may store instructions that enable the head-mountable display device to receive the 2D image through an external electronic device related to a user account of the electronic device.

According to an embodiment, in a non-transitory computer-readable recording medium storing one or more programs, the one or more programs may store instructions enabling an electronic device to obtain a 2D image.

According to an embodiment, the one or more programs may store instructions enabling the electronic device to recognize a background area and an object area in the 2D image.

According to an embodiment, the one or more programs may store instructions enabling the electronic device to separate the object area from the 2D image.

According to an embodiment, the one or more programs may store instructions enabling the electronic device to generate an expanded image further including an image portion generated outside the background area to continue at a boundary of the background area, based on an attribute of the background area.

According to an embodiment, the one or more programs may store instructions enabling the electronic device to make a setting to include the expanded image in at least a portion of the 3D background area.

According to an embodiment, the one or more programs may store instructions enabling the electronic device to dispose the object area between a point set in the virtual space and the 3D background area in relation to the field of view information.

According to an embodiment, the one or more programs may store instructions enabling the electronic device to display at least a portion of the virtual space including the set 3D background area and the disposed object area, based on the field of view information.

According to an embodiment, the one or more programs may store instructions that enable the electronic device to, as at least part of generating the expanded image, generate an image in the object area by performing in-painting using at least a portion of the background area adjacent to the object area.

According to an embodiment, the one or more programs may store instructions that enable the electronic device to determine an attribute of an object included in the object area.

According to an embodiment, the one or more programs may store instructions that enable the electronic device to add a moving graphic effect to the object at least partially based on the attribute of the object.

According to an embodiment, the one or more programs may store instructions that enable the electronic device to obtain environmental information.

According to an embodiment, the one or more programs may store instructions that enable the electronic device to determine an attribute of the graphic effect at least based on the environmental information.

According to an embodiment, the one or more programs may store instructions that enable the electronic device to identify contact information related to the object area.

According to an embodiment, the one or more programs may store instructions that enable the electronic device to provide the contact information in response to receiving a user input to the object area.

According to an embodiment, the one or more programs may store instructions that enable the electronic device to receive an event related to the contact information.

According to an embodiment, the one or more programs may store instructions that enable the electronic device to add or change the graphic effect related to the object area based on the event.

According to an embodiment, the one or more programs may store instructions that enable the electronic device to, as part of disposing, determine an attribute of an object included in the object area and selectively dispose, at least partially based on the attribute of the object, the object area at one of a first point which is set to enable interaction with the user or a second point which is set not to interact with the user.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device, cause the electronic device to perform a method of the disclosure.

Any such software may be stored in the form of volatile or non-volatile storage such as, for example, a storage device like read only memory (ROM), whether erasable or rewritable or not, or in the form of memory such as, for example, random access memory (RAM), memory chips, device or integrated circuits or on an optically or magnetically readable medium such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device (101), comprising:
a display (160);
a sensor (176);
memory (130) storing one or more computer programs; and
one or more processors (120) communicatively coupled to the display, the sensor, and the memory; and
wherein the one or more computer programs include computer-executable instructions that, when executed by the one or more processors individually or collectively, cause the electronic device to:
obtain, via the sensor, information relating to a field of view of a user,
obtain a two-dimensional, 2D, image,
identify a first portion of the 2D image to be applied as a background image of a three-dimensional, 3D, virtual space,
identify a second portion of the 2D image corresponding to an object of interest,
generate an expanded image corresponding to the first portion of the 2D image,
generate a 3D virtual image by applying a first depth to the expanded image and a second depth to the second portion of the 2D image, and
display a portion of the 3D virtual image based on the information relating to the field of view of the user.

2. The electronic device of claim 1,
wherein the one or more computer programs further include computer-executable instructions that, when executed by the one or more processors individually or collectively, cause the electronic device to:
display the portion of the 3D virtual image with a size determined based on at least one of a size of the field of view or a direction of the field of view, corresponding to the information relating to the field of view.

3. The electronic device of claim 1,
wherein the one or more computer programs further include computer-executable instructions that, when executed by the one or more processors individually or collectively, cause the electronic device to:
generate the expanded image such that a generated image portion of the expanded image includes:
an area extending from a first boundary of the 2D image in a first direction; and
an area extending from a second boundary different from the first boundary in a second direction different from the first direction.

4. The electronic device of claim 1,
wherein a background area of the 3D virtual space is configured in a shape of a curved surface whose distance from a point set in the 3D virtual space is the first depth, and
wherein the one or more computer programs further include computer-executable instructions that, when executed by the one or more processors individually or collectively, cause the electronic device to,
correct the expanded image to correspond to the shape of the curved surface.

5. The electronic device of claim 1,
wherein the one or more computer programs further include computer-executable instructions that, when executed by the one or more processors individually or collectively, cause the electronic device to:
as part of generating the expanded image, generate an area corresponding to a first range belonging to a main movable range of the field of view by performing out-painting based on the 2D image, and
generate an area corresponding to a second range, which is different from the first range, by performing in-painting, based on an image generated in the area corresponding to the first range, at least based on the information relating to the field of view.

6. The electronic device of claim 1,
wherein the one or more computer programs further include computer-executable instructions that, when executed by the one or more processors individually or collectively, cause the electronic device to:
as part of generating the expanded image, generate an image portion to be symmetrical with respect to at least one of a boundary line or an imaginary line at one or more points, of the image portion of the expanded image, which is generated based on the 2D image.

7. The electronic device of claim 1,
wherein the one or more computer programs further include computer-executable instructions that, when executed by the one or more processors individually or collectively, cause the electronic device to:
as part of generating the expanded image, generate an image portion by fading-in based on at least one of a boundary line or an imaginary line at one or more points, of the image portion of the expanded image, which is generated based on the 2D image.

8. The electronic device of claim 1,
wherein the one or more computer programs further include computer-executable instructions that, when executed by the one or more processors individually or collectively, cause the electronic device to:
receive the 2D image through an external electronic device related to a user account of the electronic device.

9. The electronic device of claim 1, wherein the electronic device is a head-mountable display, HMD, device.

10. The electronic device of claim 1, further comprising:
communication circuitry(190);
wherein the one or more computer programs further include computer-executable instructions that, when executed by the one or more processors individually or collectively, cause the electronic device to:
obtain, through the communication circuitry, the 2D image from a first external electronic device,
transmit, through the communication circuitry, the 2D image obtained from the first external electronic device to a second external electronic device, and
receive, through the communication circuitry, the expanded image from the second external electronic device in response to the transmission.

11. The electronic device of claim 1,
wherein the one or more computer programs further include computer-executable instructions that, when executed by the one or more processors individually or collectively, cause the electronic device to:
determine an attribute of the object of interest included in the second portion, and
add a moving graphic effect to the object of interest at least partially based on the attribute of the object of interest, and
wherein the one or more computer programs further include computer-executable instructions that, when executed by the one or more processors individually or collectively, cause the electronic device to:
obtain environmental information; and
determine an attribute of the graphic effect at least based on the environmental information.

12. The electronic device of claim 11, wherein the one or more computer programs further include computer-executable instructions that, when executed by the one or more processors individually or collectively, cause the electronic device to:
identify contact information related to the object of interest, and
provide the contact information in response to receiving a user input to the object of interest,
wherein the one or more computer programs further include computer-executable instructions that, when executed by the one or more processors individually or collectively, cause the electronic device to:
receive an event related to the contact information, and
add or change the graphic effect related to the object of interest based on the event.

13. The electronic device of claim 1, wherein the one or more computer programs further include computer-executable instructions that, when executed by the one or more processors individually or collectively, cause the electronic device to:
as part of generating the 3D virtual image, determine an attribute of the object of interest included in the second portion, and
selectively dispose, at least partially based on the attribute of the object of interest, the second portion at one of a first point which is set to enable interaction with the user or a second point which is set not to interact with the user.

14. A method for controlling an electronic device (101), the method comprising:
obtaining (1010), via a sensor (176)of the electronic device, information relating to a field of view of a user;
obtaining (1020) a two-dimensional, 2D, image;
identifying (1030) a first portion of the 2D image to be applied as a background image of a three-dimensional, 3D, virtual space;
identifying (1040) a second portion of the 2D image corresponding to an object of interest;
generating (1050) an expanded image corresponding to the first portion of the 2D image;
generating (1060) a 3D virtual image by applying a first depth to the expanded image and a second depth to the second portion of the 2D image; and
displaying (1070) a portion of the 3D virtual image based on the information relating to the field of view of the user.

15. One or more non-transitory computer-readable storage media storing computer-executable instructions that, when executed by one or more processors of an electronic device (101) individually or collectively, cause the electronic device (101) to perform operations, the operations comprising:
obtaining (1010), via a sensor, information relating to a field of view of a user;
obtaining (1020) a two-dimensional, 2D, image;
identifying (1030) a first portion of the 2D image to be applied as a background image of a three-dimensional, 3D, virtual space;
identifying (1040) a second portion of the 2D image corresponding to an object of interest;
generating (1050) an expanded image corresponding to the first portion of the 2D image;
generating (1060) a 3D virtual image by applying a first depth to the expanded image and a second depth to the second portion of the 2D image; and
displaying (1070) a portion of the 3D virtual image based on the information relating to the field of view of the user.
